(19) Europäisches Patentamt
European Patent Office
Office européen des brevets

(11) EP 4 317 288 B1

(12) **EUROPEAN PATENT SPECIFICATION**

(45) Date of publication and mention of the grant of the patent:
**01.10.2025 Bulletin 2025/40**

(21) Application number: **22775816.6**

(22) Date of filing: **25.03.2022**

(51) International Patent Classification (IPC):
***C08K 5/3435*** $^{(2006.01)}$ ***C08K 5/5357*** $^{(2006.01)}$
***C08L 23/14*** $^{(2006.01)}$ ***C08J 9/04*** $^{(2006.01)}$
***C08J 9/18*** $^{(2006.01)}$ ***C08J 9/00*** $^{(2006.01)}$
***C08J 9/232*** $^{(2006.01)}$

(52) Cooperative Patent Classification (CPC):
(C-Sets available)
**C08J 9/0038; C08J 9/0028; C08J 9/18;**
**C08J 9/232;** C08J 2203/06; C08J 2205/044;
C08J 2323/14; C08J 2323/16; C08L 23/14 (Cont.)

(86) International application number:
**PCT/JP2022/014281**

(87) International publication number:
**WO 2022/203035 (29.09.2022 Gazette 2022/39)**

(54) **POLYPROPYLENE-BASED FOAMED PARTICLES AND POLYPROPYLENE-BASED FOAMED MOLDED ARTICLE AND MANUFACTURING METHOD THEREOF**

GESCHÄUMTE PARTIKEL AUF POLYPROPYLENBASIS UND GESCHÄUMTER FORMKÖRPER AUF POLYPROPYLENBASIS UND HERSTELLUNGSVERFAHREN DAFÜR

PARTICULES EXPANSÉES À BASE DE POLYPROPYLÈNE ET ARTICLE MOULÉ EXPANSÉ À BASE DE POLYPROPYLÈNE ET LEUR PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.03.2021 JP 2021054111**

(43) Date of publication of application:
**07.02.2024 Bulletin 2024/06**

(73) Proprietor: **Kaneka Corporation**
**Osaka-shi, Osaka 530-8288 (JP)**

(72) Inventor: **FUKUZAWA, Jun**
**Settsu-shi, Osaka 566-0072 (JP)**

(74) Representative: **Vossius & Partner**
**Patentanwälte Rechtsanwälte mbB**
**Siebertstrasse 3**
**81675 München (DE)**

(56) References cited:
**EP-A1- 2 420 533** **EP-A1- 2 743 295**
**EP-A1- 3 002 311** **EP-A1- 3 202 834**
**WO-A1-03/048239** **WO-A1-2010/119670**
**WO-A1-2013/022049** **WO-A1-2016/052739**
**JP-A- 2001 348 724** **JP-A- 2004 083 913**
**JP-A- 2004 263 033** **JP-A- 2018 030 939**
**JP-A- 2018 030 939** **JP-A- 2021 138 664**
**JP-A- H09 227 711** **JP-A- H09 227 711**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 5/34926, C08L 23/14;**
**C08K 5/5357, C08L 23/14**

## Description

### Technical Field

The present invention relates to polypropylene-based expanded particles, a polypropylene-based foamed molded product, and methods for producing the polypropylene-based expanded particles and the polypropylene-based foamed molded product.

### Background Art

Foamed molded products obtained by in-mold foam molding of thermoplastic resins (such as polypropylene-based resins) are widely used for various purposes such as interior materials and shock-absorbing materials of automobiles. Conventionally, for interior materials for automobiles, those which have flame retardancy in accordance with the FMVSS302 standard have been employed. However, as a result of a recent shift of the automobiles to the electric vehicles, members having higher flame retardancy are required for members in the vicinity of electrical devices such as in the vicinity of a lithium ion battery pack. For example, Patent Literature 1 discloses a technique for obtaining polyolefin-based resin expanded particles that may give a foamed molded product with excellent flame retardancy by adding specific amounts of an organic phosphorus-based compound and a hindered amine to polyolefin-based resin expanded particles. Patent Literature 2 discloses expanded particles comprising a propylene-based polymer and an organic phosphorus-based flame retardant.

### Citation List

[Patent Literature]

[Patent Literature 1]
International Publication No. WO2016/052739
[Patent Literature 2]
JP H09 227711 A

### Summary of Invention

### Technical Problem

However, conventional techniques such as that described above are insufficient from the viewpoint of flame retardancy, and therefore have room for further improvement.

In view of the above circumstances, an object of an embodiment of the present invention is to provide polypropylene-based expanded particles that can give a polypropylene-based foamed molded product having superior flame retardancy in comparison with the conventional techniques.

### Solution to Problem

As a result of diligent research in order to attain the object, the inventors of the present invention completed the present invention.

That is, an embodiment of the present invention includes features below.

Polypropylene-based expanded particles containing: a polypropylene-based resin (A), an organic phosphorus-based compound (B), and a hindered amine (C), wherein the polypropylene-based expanded particles contain the organic phosphorus-based compound (B) in an amount of more than 10.0% by weight and not more than 20.0% by weight and the hindered amine (C) in an amount of 1.0% by weight to 10.0% by weight with respect to 100% by weight as a total amount of the polypropylene-based expanded particles.

A method for producing polypropylene-based expanded particles, containing: a dispersion step of dispersing polypropylene-based resin particles, an aqueous dispersion medium, and a blowing agent in a vessel; and a releasing step of releasing, into a region having a pressure lower than an internal pressure of the vessel, a dispersion slurry obtained in the dispersion step, wherein the polypropylene-based resin particles contain an organic phosphorus-based compound (B) in an amount of more than 10.0% by weight and not more than 20.0% by weight and a hindered amine (C) in an amount of 1.0% by weight to 10.0% by weight with respect to 100% by weight as a total amount of the polypropylene-based resin

particles.

Advantageous Effects of Invention

An embodiment of the present invention brings about an effect of being able to provide polypropylene-based expanded particles that can give a polypropylene-based foamed molded product having superior flame retardancy in comparison with the conventional techniques.

Description of Embodiments

The following description will discuss embodiments of the present invention. The present invention is not, however, limited to the embodiments below. The present invention is not limited to arrangements described below, but may be altered in various ways by a skilled person within the scope of the claims. The present invention also encompasses, in its technical scope, any embodiment or example derived by combining technical means disclosed in respective differing embodiments and Examples. Further, it is possible to form a new technical feature by combining the technical means disclosed in the respective embodiments. Any numerical range expressed as "A to B" in the present specification means "not less than A and not more than B (i.e., a range from A to B which includes both A and B)" unless otherwise stated.

Furthermore, in the present specification, a copolymer containing, as structural units, a structural unit derived from monomer $X^1$, a structural unit derived from monomer $X^2$, ... , and a structural unit derived from monomer $X^n$ (where n is an integer of 2 or more) may be referred to as "$X^1/X^2/ ... /X^n$ copolymer", unless otherwise stated. The $X^1/X^2/.../X^n$ copolymer is not limited to any particular polymerization form unless otherwise explicitly stated, but may be a random copolymer, an alternating copolymer, a block copolymer, or a graft copolymer.

In the present specification, a structural unit derived from an X monomer contained in a polymer or a copolymer may be referred to as "X unit".

[1. Technical idea of embodiment of present invention]

The technique disclosed in Patent Literature 1 was an excellent technique in view of the technical level at the time of filing of Patent Literature 1. However, in recent years, the standards for flame retardancy in various industrial fields (e.g., electric devices and electronic devices, particularly devices used in electric vehicles and the like) tend to be stricter than those at the time of filing of Patent Literature 1. Therefore, there are demands for a polypropylene-based foamed molded product having superior flame retardancy.

It is expected that, in the future, a polypropylene-based foamed molded product will be required to satisfy standards such as an oxygen index (OI) and a vertical burning test (UL94) as stricter flame retardancy standards. In fact, substances having an oxygen index of not more than 26% are considered as designated flammable materials in the Fire Service Act. It should be noted that the OI is an index defined by JIS K7201 and the like, and indicates the minimum oxygen concentration (capacity%) necessary for sustaining the burning of a material. It can also be said that a foamed molded product which satisfies the OI standard (e.g., an OI of not less than 26%) has excellent non-ignition properties. UL94 is a standard of a burning duration of a material and is a standard to examine whether or not a flammable material around the burning material is ignited even when burning particles fall (drip). (UL94 can be said to be a standard to determine whether or not falling particles are extinguished before coming into contact with a flammable material therearound, i.e., whether or not the flammable material catches fire due to dripping.) It can also be said that a foamed molded product which satisfies the standard of UL94 (particularly, standard V-0) is excellent in self-extinguishing property.

A technique for imparting flame retardancy to a polypropylene-based foamed molded product by adding a halogen-containing compound is known. In recent years, however, halogen-containing compounds, particularly bromine-containing organic compounds (e.g., polybrominated diphenyl ethers), have been found to be harmful to the environment and to human health, and are therefore viewed as a problem. For example, the provisions of the European Union since July 2006 prohibit the production and use of pentabromodiphenyl ether and octabromodiphenyl oxide, and limit the amount of use of decabromodiphenyl oxide.

Under such circumstances, there are demands for a polypropylene-based foamed molded product which contains no halogen-containing compound and has superior flame retardancy in comparison with a conventional foamed molded product (such as that disclosed in Patent Literature 1).

Under the circumstances, the inventors of the present invention conducted diligent research to provide polypropylene-based expanded particles that can give a polypropylene-based foamed molded product having superior flame retardancy, and, as a result, found the following knowledge and thus completed the present invention: A polypropylene-based foamed molded product having superior flame retardancy can be given by polypropylene-based expanded particles containing: a polypropylene-based resin (A), an organic phosphorus-based compound (B), and a hindered amine (C), wherein the polypropylene-based expanded particles contain cyclic phosphonate (B) in an amount of

more than 10.0% by weight and not more than 20.0% by weight and the hindered amine (C) in an amount of 1.0% by weight to 10.0% by weight with respect to 100% by weight as a total amount of the polypropylene-based expanded particles.

[2. Polypropylene-based expanded particles]

Polypropylene-based expanded particles in accordance with an embodiment of the present invention contain: a polypropylene-based resin (A), an organic phosphorus-based compound (B), and a hindered amine (C), wherein the polypropylene-based expanded particles contain the organic phosphorus-based compound (B) in an amount of more than 10.0% by weight and not more than 20.0% by weight and the hindered amine (C) in an amount of 1.0% by weight to 10.0% by weight with respect to 100% by weight as a total amount of the polypropylene-based expanded particles.

By molding the polypropylene-based expanded particles in accordance with an embodiment of the present invention by a known method, it is possible to provide a polypropylene-based foamed molded product.

In the present specification, the "polypropylene-based expanded particles" may be referred to as "expanded particles", the "polypropylene-based expanded particles in accordance with an embodiment of the present invention] may be referred to as "present expanded particles", and the "polypropylene-based resin foamed molded product] may be referred to as "foamed molded product".

The present expanded particles have the above feature, and therefore bring about the advantage of being able to provide a foamed molded product having excellent flame retardancy. It can also be said that the present expanded particles can provide a polypropylene-based foamed molded product that is excellent in self-extinguishing property and/or non-ignition property.

<Polypropylene-based resin (A)>

In the present specification, the polypropylene-based resin (A) is intended to mean a resin which contains structural units derived from a propylene monomer, at least in a proportion of not less than 50 mol% with respect to 100 mol% of all structural units contained in the resin. In the present specification, the "structural units derived from a propylene monomer" may be referred to as "propylene units".

For example, the linear polypropylene-based resin (A) may be (a) a homopolymer of propylene, (b) a block copolymer, an alternating copolymer, a random copolymer, or a graft copolymer that is a copolymer of propylene and a monomer other than propylene, or (c) a mixture of at least two thereof. Among these, the polypropylene-based resin (A) is preferably a random copolymer of propylene and a monomer other than propylene because the random copolymer has an advantage that resin particles and expanded particles can be processed at a low heating temperature in the expansion step and the step of in-mold foam molding described later. A "random copolymer of propylene and a monomer other than propylene" can also be described as a random copolymer that contains a structural unit derived from propylene and a structural unit derived from a monomer(s) other than propylene.

In addition to the propylene units, the polypropylene-based resin (A) may have one or more units of structural units derived from a monomer(s) other than a propylene monomer or may have one or more types of structural units derived from monomers other than a propylene monomer. A "monomer(s) other than a propylene monomer" used in the production of the polypropylene-based resin (A) may be referred to as a "comonomer(s)". The "structural unit(s) derived from a monomer(s) other than a propylene monomer" contained in the polypropylene-based resin may be referred to as a "comonomer unit(s)".

Examples of such a comonomer(s) include $\alpha$-olefin having 2 or 4 to 12 carbon atoms, such as ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and 1-decene.

Specific examples of the polypropylene-based resin (A) include polypropylene homopolymers, ethylene/propylene random copolymers, 1-butene/propylene random copolymers, 1-butene/ethylene/propylene random copolymers, ethylene/propylene block copolymers, 1-butene/propylene block copolymers, propylene/chlorinated vinyl copolymers, propylene/maleic anhydride copolymers, and styrene-modified polypropylene-based resins. As a polypropylene-based resin (A), one of these can be used alone or in combination of two or more thereof. Among these, ethylene/propylene random copolymers and 1-butene/ethylene/propylene random copolymers are suitable in that they provide good expandability to expanded particles obtained therefrom, and favorable moldability to the present molded product. Note that "1-butene" above is synonymous with "butene-1".

A case in which an ethylene / propylene random copolymer is used as a polypropylene-based resin (A) (hereinafter "Case A") will be considered. In Case A, the ethylene content of the ethylene/propylene random copolymer is preferably 0.2% by weight to 15.0% by weight, more preferably 0.5% by weight to 10.0% by weight, and even more preferably 0.5% by weight to 4.0% by weight with respect to 100% by weight of the copolymer. The ethylene content can also be described as the amount of structural unit (ethylene unit) derived from ethylene. (i) In a case where the amount of the ethylene unit contained in the ethylene/propylene random copolymer is not less than 0.2 weight%, there tends to be

good expandability of expanded particles during production of the present expanded particles and/or good moldability of resulting expanded particles. (ii) In a case where the amount of the ethylene unit contained in the ethylene/propylene random copolymer is not more than 15.0% by weight, there is no risk that the mechanical properties of the foamed molded product which result from the present expanded particles deteriorate.

A case in which a 1-butene/ ethylene/propylene random copolymer is used as a polypropylene-based resin (B) (hereinafter "Case B") will be considered. The ethylene content of the 1-butene/ ethylene/propylene random copolymer is preferably 0.1% by weight to 10.0% by weight, more preferably 0.2% by weight to 5.0% by weight, and even more preferably 0.5% by weight to 1.0% by weight with respect to 100% by weight of the copolymer. (i) In a case where the amount of the ethylene unit contained in the 1-butene/ ethylene/propylene random copolymer is not less than 0.1 weight%, there tends to be good expandability of expanded particles during production of the present expanded particles and/or good moldability of resulting expanded particles. (ii) In a case where the amount of the ethylene unit contained in the 1-butene/ ethylene/propylene random copolymer is not more than 10.0% by weight, there is no risk that the mechanical properties of the foamed molded product which result from the present expanded particles deteriorate.

In Case B, the 1-butene content of the 1-butene/ ethylene/propylene random copolymer is preferably 0.2% by weight to 15.0% by weight, more preferably 1.0% by weight to 10.0% by weight, and even more preferably 2.0% by weight to 7.0% by weight with respect to 100% by weight of the copolymer. The 1-butene content can also be described as the amount of structural unit (1-butene unit) derived from 1-butene. (i) In a case where the amount of the 1-butene unit contained in the 1-butene/ ethylene/propylene random copolymer is not less than 0.2 weight%, there tends to be good expandability of expanded particles during production of the present expanded particles and/or good moldability of resulting expanded particles. (ii) In a case where the amount of the 1-butene unit contained in the 1-butene/ ethylene/propylene random copolymer is not more than 15.0% by weight, there is no risk that the mechanical properties of the foamed molded product which result from the present expanded particles deteriorate.

In Case B, the total amount of the ethylene unit and the 1-butene unit contained in the 1-butene/ ethylene/propylene random copolymer is preferably 0.5% by weight to 15.0% by weight, more preferably 0.5% by weight to 10.0% by weight, and even more preferably 2.0% by weight to 6.0% by weight with respect to 100% by weight of the 1-butene/ ethylene/propylene random copolymer. (i) In a case where the total amount of the ethylene unit and the 1-butene unit contained in the 1-butene/ ethylene/propylene random copolymer is not less than 0.5 weight%, there tends to be good expandability of expanded particles during production of the present expanded particles and/or good moldability of resulting expanded particles. (ii) In a case where the total amount of the ethylene unit and the 1-butene unit contained in the 1-butene/ ethylene/propylene random copolymer is not more than 10.0% by weight, there is no risk that the mechanical properties of the foamed molded product which result from the present expanded particles deteriorate.

The amount of the propylene unit contained in the polypropylene-based resin (A) is not less than 50 mol%, preferably not less than 75 mol%, more preferably not less than 90 mol%, and even more preferably not less than 95 mol% with respect to 100 mol% of all structural units contained in the polypropylene-based resin (A). A polypropylene-based resin (A) in which the amount of the propylene unit contained falls within the above ranges brings about an advantage of resulting in a foamed molded product that has good heat resistance, good mechanical strength, and good impact resistance. The upper limit of the amount of propylene unit contained in the polypropylene-based resin (A) is not particularly limited, and can be, for example, not more than 97 mol% or not more than 100 mol%.

The melting point of the polypropylene-based resin (A) is preferably 125.0°C to 160.0°C, more preferably 130.0°C to 158.0°C, even more preferably 135.0°C to 152.0°C, even more preferably 138.0°C to 149.0°C, still more preferably 139.0°C to 146.0°C, and particularly preferably 141.0°C to 145.0°C. (i) In a case where the melting point of the polypropylene-based resin (A) is not less than 125.0°C, it is possible to obtain a foamed molded product having excellent dimensional stability at a high temperature. (ii) In a case where the melting point of the polypropylene-based resin (A) is not more than 160.0°C, the foamed molded product can be subjected to in-mold foam molding at a low steam pressure.

In the present specification, the melting point of the polypropylene-based resin is a value measured and obtained by a differential scanning calorimetry (hereinafter referred to as "DSC method"). Specific procedures are as follows: (1) the temperature of 5 mg to 6 mg of the polypropylene-based resin is increased from 40.0°C to 220.0°C at a temperature increase rate of 10.0°C/min so that the polypropylene-based resin is melted; (2) thereafter, the temperature of the melted polypropylene-based resin is decreased from 220.0°C to 40.0°C at a temperature decrease rate of 10.0°C/min so that the polypropylene-based resin is crystallized; and (3) then, the temperature of the crystallized polypropylene-based resin is increased from 40.0°C to 220.0°C at a temperature increase rate of 10°C/min. It is possible to determine, as the melting point of the polypropylene-based resin, a temperature at a peak (melting peak) in a DSC curve of the polypropylene-based resin which DSC curve is obtained in the second temperature increase (i.e., in (3)). Note that, in a case where a plurality of peaks (melting peaks) are present in a DSC curve of the polypropylene-based resin obtained during the second temperature increase by the above-described method, a temperature at a peak (melting peak) having the greatest melting heat quantity is regarded as a melting point of the polypropylene-based resin. As a differential scanning calorimeter, for example, a differential scanning calorimeter of a DSC6200 type manufactured by Seiko Instruments Inc. can be used.

The melt index (MI) of the polypropylene-based resin (A) is not particularly limited, and is preferably 3.00 g/10 minutes to 30.00 g/10 minutes, more preferably 4.00 g/10 minutes to 20.00 g/10 minutes, even more preferably 5.00 g/10 minutes to 15.00 g/10 minutes, and particularly preferably 6.00 g/10 minutes to 13.00 g/10 minutes. MI may be referred to "melt flow rate (MFR)".

In a case where the MI of the polypropylene-based resin is not less than 3.00 g/10 minutes, the flowability of the resin at the time of expansion is good and expansion is easy. In a case where the MI of the polypropylene-based resin is not more than 30.00 g/10 minutes, the polypropylene-based resin has adequate flowability. Therefore, expanded particles having a high expansion ratio can be obtained. In particular, in a case where the MI of the polypropylene-based resin (A) is 3.00 g/10 minutes to 8.00 g/10 minutes, it is possible to efficiently produce expanded particles which can suitably provide a foamed molded product having a relatively high density (e.g., a density of more than 92.0 g/L).

In the present specification, the MI of the polypropylene-based resin is a value measured and obtained with use of an MI measurement device described in JIS K7210:1999 under the following conditions: the diameter $\varphi$ of an orifice is $2.0959\pm0.005$ mm; the length of the orifice is $8.000\pm0.025$ mm; the load is 2.16 kgf; and the temperature is 230°C (230 $\pm0.2$°C). It should be noted that, in a case where the polypropylene-based resin (A) is a mixture of a plurality of types of copolymers, the MI of the polypropylene-based resin (A) is intended to mean a melting point of the mixture.

The present expanded particles contain the polypropylene-based resin (A) in an amount of preferably 70.0% by weight and less than 89.0% by weight, more preferably 75% by weight to 85% by weight, and more preferably 77% by weight to 87% by weight, with respect to 100% by weight as a total amount of the polypropylene-based expanded particles. (i) In a case where the expanded particles contain the polypropylene-based resin (A) in an amount of not less than 70.0% by weight, it is possible to obtain a foamed molded product having no shrinkage and having excellent strength (e.g., compressive strength). (ii) In a case where the expanded particles contain the polypropylene-based resin (A) in an amount of less than 89.0% by weight, it is possible to stably obtain a foamed molded product having excellent flame retardancy.

The polypropylene-based resin (A) can be obtained by a known method. A polymerization catalyst to be used in synthesizing the polypropylene-based resin (A) is not limited to any particular one. Possible examples of the polymerization catalyst include a Ziegler catalyst and a metallocene catalyst.

<Organic phosphorus-based compound (B)>

The present expanded particles contain the organic phosphorus-based compound (B) in an amount of more than 10.0% by weight and not more than 20.0% by weight, with respect to 100% by weight as a total amount of the polypropylene-based expanded particles. The present expanded particles having the above feature bring about the advantage of being able to provide expanded particle that can give a foamed molded product having excellent flame retardancy.

The present expanded particles contain the organic phosphorus-based compound (B) in an amount of more than 10.0% by weight and not more than 20.0% by weight, preferably 12.0% by weight to 19.0% by weight, and more preferably 13.0% by weight to 18.0% by weight, with respect to 100% by weight as a total amount of the polypropylene-based expanded particles. (i) In a case where the expanded particles contain the organic phosphorus-based compound (B) in an amount of more than 10.0 weight%, it is possible to stably obtain a foamed molded product having excellent flame retardancy. (ii) In a case where the expanded particles contain the organic phosphorus-based compound (B) in an amount of not more than 20.0% by weight, it is possible to obtain a foamed molded product having no shrinkage and having excellent strength (e.g., compressive strength).

The organic phosphorus-based compound (B) is not particularly limited, provided that the organic phosphorus-based compound (B) is an organic phosphorus-based compound other than a phosphoric ester, a phosphate, and a triarylphosphine oxide. A large number of other organic phosphorus-based compounds (a subclass of the organic phosphorus-based compound) which are well known to a person skilled in the art can be suitably used as the organic phosphorus-based compound (B). One type of these organic phosphorus-based compounds (B) can be used alone or in combination of two or more thereof.

More specific examples of the organic phosphorus-based compound (B) in accordance with an embodiment of the present invention include phosphonates; organic phosphites; organic phosphinites; and metal salts of phosphinic acid or diphosphinic acid; phosphinates; polyol phosphate alcohols; and other nitrogen-containing organic phosphorus-based compounds. Among these, the organic phosphorus-based compound (B) is preferably phosphonate because phosphonate can provide a foamed molded product that is superior in non-ignition property and/or superior self-extinguishing property. Among the above organic phosphorus-based compounds, the compounds excluding the other nitrogen-containing organic phosphorus-based compounds preferably contain no nitrogen. That is, the organic phosphorus-based compound (B) other than the nitrogen-containing organic phosphorus-based compounds preferably contain no nitrogen.

(Phosphonate)

Phosphonates are intended to mean: esters and partial esters containing $R\text{-}PO(OH)_2$ and/or $R\text{-}PO(OR^1)_2$ groups (where R is a hydrocarbyl group such as methyl group, benzyl group, aryl group, alkynyl group, allenyl group, vinyl group or substituted vinyl group, and $R^1$ is a hydrocarbyl group such as alkyl group or aryl group); and salts thereof.

More specific examples of the phosphonates include sub-groups such as: alkyl phosphonic acids, aryl phosphonic acids, and esters thereof; mono-phosphonates; acyclic bisphosphonates; and cyclic phosphonates. Among these, cyclic phosphonates are preferable. Among the cyclic phosphonates, cyclic bisphosphonates are particularly preferable. Therefore, the organic phosphorus-based compound (B) in accordance with an embodiment of the present invention is preferably at least one type of non-nitrogen-containing organic phosphorus-based compound selected from the group consisting of (i) alkyl phosphonic acids, aryl phosphonic acids, and esters thereof and (ii) cyclic phosphonates. The organic phosphorus-based compound (B) is more preferably cyclic phosphonates, and, among cyclic phosphonates, particularly preferably cyclic bisphosphonates.

Examples of cyclic phosphonates include organic phosphorus-based compounds represented by the following structural formula (i):

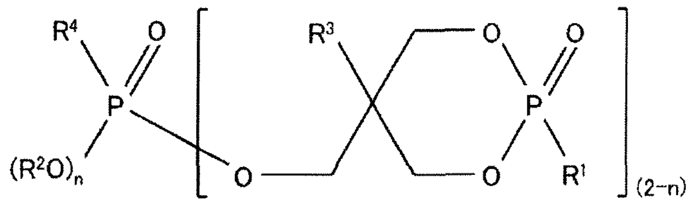

• • •(i)

where $R^1$ and $R^2$ are independently $C_{1\text{-}4}$ alkyl group, $R^3$ is H or $C_{1\text{-}4}$ alkyl group, $R^4$ is $C_{9\text{-}22}$ alkyl group, $C_{9\text{-}22}$ cycloalkyl group, $C_{9\text{-}22}$ aryl group or $C_{9\text{-}22}$ aralkyl group, and n = 0 or 1.

More specifically, the cyclic phosphonate represented by the structural formula (i) above is disclosed in detail in the specification of French Patent Application Publication No. 1503429.

As the cyclic phosphonate, cyclic bisphosphonate, which is an organic phosphorus-based compound represented by the following structural formula (ii), such as pentaerythrityl diphosphonate, can also be suitably used:

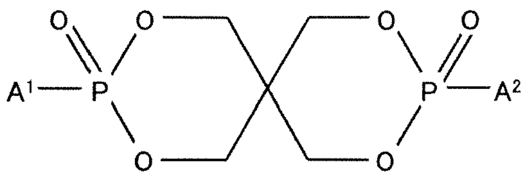

• • •(ii)

where $A^1$ and $A^2$ are independently $C_{1\text{-}10}$ alkyl group, $C_{2\text{-}10}$ alkenyl group, benzyl group, phenylethyl group, phenyl group or naphthyl group.

That is, the cyclic bisphosphonate is particularly preferably pentaerythrityl diphosphonate.

The cyclic bisphosphonates are disclosed in more detail in Specification of US Patent No. 4174343 and Specification of UK Patent Application Publication No. 1515223.

Among the cyclic bisphosphonates, pentaerythrityl diphosphonate (AFLAMMIT (registered trademark) PCO 900 (phosphorus content: 24%)), which is represented by the following structural formula (iii), is particularly preferable because it is possible to obtain a foamed molded product having excellent dimensional stability under heating.

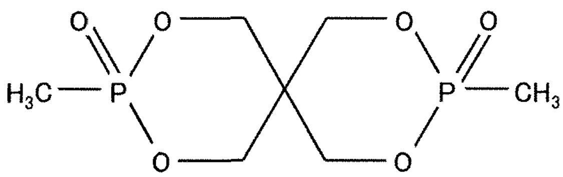

• • •(iii)

As other cyclic phosphoric esters, the compound disclosed in the specification of French Patent Application Publication No. 1503429 can be used.

(Organic phosphite)

Examples of the organic phosphites include: alkyl phosphites and arylalkyl phosphites (preferably wherein the alkyl group has from 1 to 4 carbon atoms) such as dimethyl phosphite, diethyl phosphite, trimethyl phosphite, dibutylphosphite, triisopropyl phosphite, dibenzyl phosphite, bis(2,2,2-trifluoroethyl) phosphite, tris(2,2,2-trifluoroethyl) phosphite, tris(1,1,1,3,3,3-hexafluoro-2-propyl) phosphite, and diphenyl phosphite; cyclic phosphites such as trimethylolethane cyclic phosphite (also known as 4-methyl-2,6,7-trioxa-1-phosphabicyclo[2.2.2]octane); and cyclic hydrogen phosphites as broadly described in US Patent No. 3,152,164, such as for instance 2-hydroxy-4,5-dimethyl-1,3,2-dioxaphospholane (2,3-butylene hydrogen phosphite), 2-hydroxy-4-methyl-1,3,2-dioxaphosphorinane, 2-hydroxy-4-methyl-1,3,2-dioxaphospholane (propylene hydrogen phosphite), 2-hydroxy-1,3,2-dioxaphos-phorinane (trimethylene hydrogen phosphite), 2-hydroxy-5,5-dimethyl-1,3,2-dioxaphosphorinane, and 2-hydroxy-4-propyl-5-ethyl-1,3,2-dioxaphosphorinane.

(Organic phosphinite, and metal salt of phosphinic acid or diphosphinic acid)

The metal salt of phosphinate or diphosphinate is intended to mean a metal salt of a compound (phosphinic acid or diphosphinic acid) represented by the chemical formulas RR'P(=O)-OMe and MeO-PR(=O)-$R^1$-PRO'(=O)-OMe. It should be noted that: R and R' are independently selected from the group consisting of $C_{1-6}$ alkyl group, $C_{3-8}$ cycloalkyl group, $C_{6-16}$ aryl group or aralkyl group; Me is a metal from Group I (alkali), II (alkaline-earth, or zinc) or III (e.g., aluminum) of the periodic table; and $R^1$ is $C_{1-6}$ alkylene group, arylene group, arylalkylene group or arene-bisalkylene linking group.

More specific examples of the organic phosphinite and metal salt of phosphinic acid or diphosphinic acid include, but are not particularly limited to, the alkali, magnesium, zinc and aluminum salts of dimethyl phosphinic, methylethylphosphinic, methylpropylphosphinic, methylhexylphosphinic, ethylphenylphosphinic, diethylphosphinic, ethane-1,2-dimethylphosphinic, ethane-1,2-diethylphosphinic, ethane-1,2-diphenylphosphinic and butane-1,4-dimethylphosphinic acid.

(Phosphinate)

Examples of the phosphinates include aluminum diethyl phosphinate.

(Polyol phosphate alcohol)

Examples of the polyol phosphate alcohol include commercially available compounds, such as bis(pentaerythritol phosphate alcohol) alkyl phosphonate wherein the alkyl group has from 1 to 4 carbon atoms, or a (pentaerythritol phosphate alcohol) phosphite.

(Other nitrogen-containing organic phosphorus-based compounds)

A nitrogen-containing organic phosphorus-based compound can be used as the organic phosphorus-based compound (B). The nitrogen-containing organic phosphorus-based compound is intended to mean an organic phosphorus-based compound that contains at least one N atom in the structural formula. Examples of the nitrogen-containing organic phosphorus-based compound include phosphoramidates, organic phosphazenes (and salts thereof, phosphoramidites, phosphonamides, and phosphinamides.

The phosphoramidate is preferably a compound represented by the following structural formula (iv):

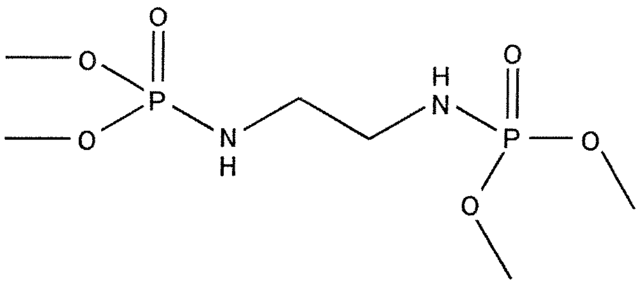

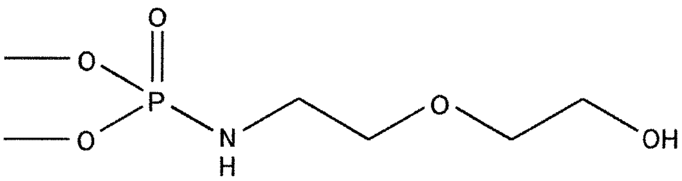

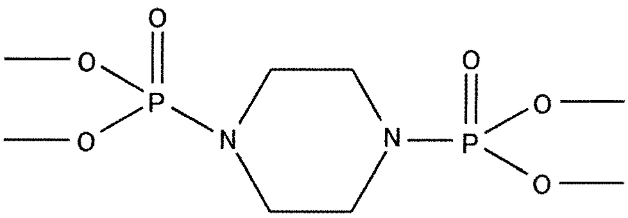

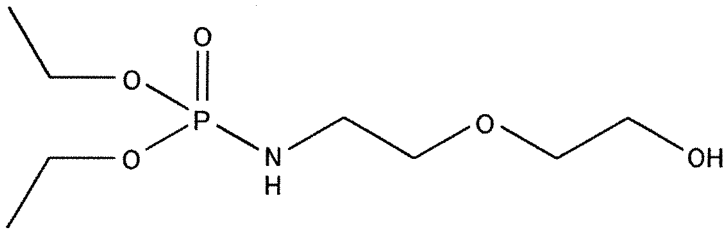

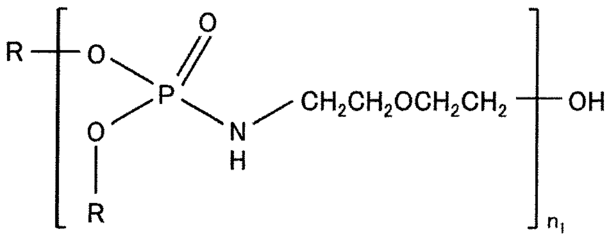

···(iv)

where R is $CH_3$ or $CH_2CH_3$, and $n_1$ is 2 to 10. The compound represented by the above structural formula (iv) is disclosed in more detail in International Publication No. WO 2009/153034.

Organic phosphazenes (also known as iminophosphoranes or phosphine imides) and salts (specifically chlorides and fluorides) thereof are intended to mean a compound in which a phosphorus atom covalently bonded to an N atom by a double bond and to three other atoms or radicals by single bonds. Specific examples of the organic phosphazenes include bis(triphenylphosphine)iminum chloride, BEMP (2-tert-butylimino-2-diethylamino-1,3-dimethylperhydro-1,3,2-diazaphosphorine), BTPP ((tert-butylimino)tris-(pyrrolidino)phosphorane), and t-Bu-P4 (3-t-butylimino-1,1,1,5,5,5-hexakis(dimethylamino)-3 {[tris(dimethylamino)phosphoranylidene]amino}-1$\lambda^5$,3$\lambda^5$,5$\lambda^5$-1,4-triphosphazadiene). Among these, a cyclic organic phosphazene represented by the following structural formula (v) is preferable:

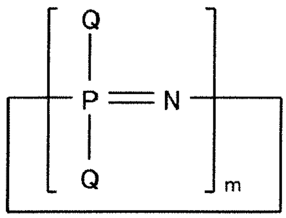

...(v)

where m is 3 to 20, and each Q group is at least one selected from the group consisting of a phosphate group, an aryloxy group containing no phosphorus atoms or halogen atoms, and an alkoxy group.

The compound represented by the above structural formula (v) is disclosed in more detail in International Publication No. WO 2009/055993.

Specific examples of the cyclic organic phosphazene include a compound DPPPZ represented by the following structural formula (vi) (in which Ph represents a phenyl group):

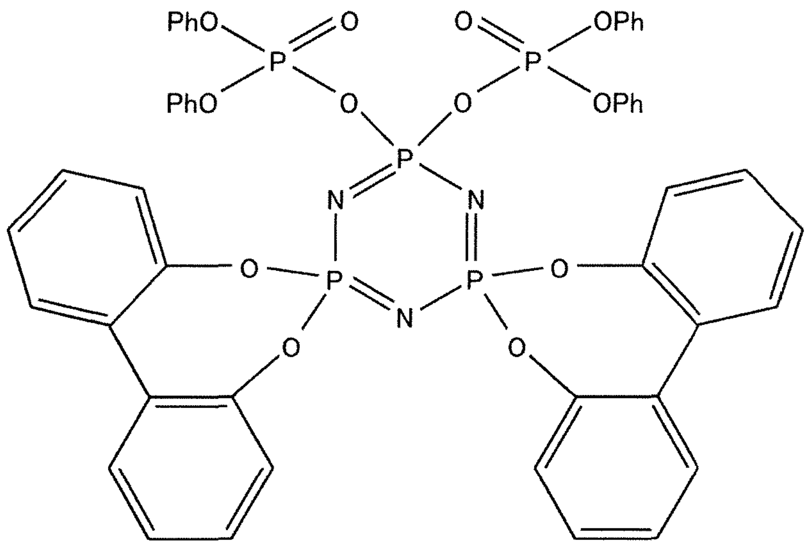

...(vi)

(Hindered amine (C))

The present expanded particles contain the hindered amine (C) in an amount of 1.0% by weight to 10.0% by weight with respect to 100% by weight as a total amount of the polypropylene-based expanded particles. The present expanded particles having the above feature bring about the advantage of being able to provide expanded particle that can give a foamed molded product having excellent flame retardancy.

The present expanded particles contain the hindered amine (C) in an amount of 1.0% by weight to 10.0% by weight, preferably 2.0% by weight to 8.0% by weight, more preferably 2.5% by weight to 7.0% by weight, and even more preferably 3.0% by weight to 6.0% by weight, with respect to 100% by weight as a total amount of the polypropylene-based expanded particles. (i) In a case where the present expanded particles contain the hindered amine (C) in an amount of more than 0.1 weight%, it is possible to obtain a foamed molded product which is excellent in non-ignition property and excellent self-extinguishing property. (ii) In a case where the present expanded particles contain the hindered amine (C) in an amount of not more than 10.0% by weight, it is possible to suppress the agglomeration (blocking) of the resin particles during the expansion step described later.

In the present specification, the hindered amine (C) is intended to mean a hindered amine (hereinafter may also be referred to as an N-substituted hindered amine) that has an OR group directly substituted on an N atom (where R is a saturated or unsaturated hydrocarbyl group). In other words, in the present specification, a hindered amine that has no OR group directly substituted on the N atom is not regarded as a hindered amine (C). The hindered amine (C) is not limited to any particular one, provided that the hindered amine has an OR group directly substituted on the N atom (where R is a saturated or unsaturated hydrocarbyl group). A number of known subclasses of the hindered amine can be used as the hindered amine (C). As the hindered amine (C), one type of hindered amine can be used alone or two or more types of hindered amines can be used in combination.

In an embodiment of the present invention, the hindered amine (C) is preferably an N-substituted hindered amine that contains a triazine component. The N-substituted hindered amine containing a triazine component (hereinafter may

also be referred to as triazine skeleton-containing hindered amine) is not limited to any particular one, and is preferably (i) a compound of CAS No. 191680-81-6 ((i-1) which is a reaction product of N,N'-bis(3-aminopropyl)ethylenediamine and a product obtained by reacting cyclohexane with a reaction product of peroxidized N-butyl-2,2,6,6,-tetramethyl-4-piperidinamine and 2,4,6-trichloro-1,3,5-triazine, (i-2) which can also be said to be a reaction product of 2,4-bis((1-cyclohexyloxy-2,2,6,6-tetramethylpiperidine-4-yl)butylamino)-6-chloro-S-triazine and N,N'-bis(3-aminopropyl)ethylenediamine, (i-3) which can also be said to be N,N',N'''-tris{2,4-bis[(1-hydrocarbyloxy-2,2,6,6-tetramethylpiperidine-4-yl)alkylamino]-s-triazin-6-yl}-3,3'-ethylenediiminodipropylamine) or (ii) bis(1-undecanoxy-2,2,6,6-tetramethylpiperidine-4-yl)carbonate. It is also possible to use isomers or a crosslinked derivative of these. The triazine skeleton-containing hindered amine is disclosed in detail in page 2, line 32 to page 4, line 6 of the specification of European Patent No. 0889085.

A commercially available product can be suitably used as a triazine skeleton-containing hindered amine. Examples of the commercially available product of the triazine skeleton-containing hindered amine include NOR116 (compound of CAS No. 191680-81-6) of FLAMSTAB (registered trademark) manufactured by BASF, NOW XP of HOSTAVIN (registered trademark) manufactured by CLARIANT, and ADK STAB LA-81 (bis(1-undecanoxy-2,2,6,6-tetramethylpiperidine-4-yl) carbonate) manufactured by ADEKA Corporation.

In an embodiment of the present invention, the hindered amine (C) can be a compound represented by the following structural formula (vii):

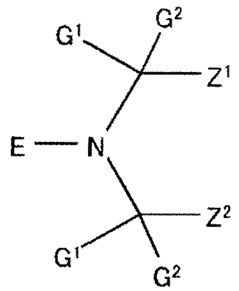

···(vii)

where $G^1$ and $G^2$ are independently $C_{1-8}$ alkyl group or pentamethylene; $Z^1$ and $Z^2$ are each methyl group, or $Z^1$ and $Z^2$ together form a bond component which may additionally be substituted by an ester group, an ether group, an amide group, an amino group, a carboxy group, or a urethane group; and E is a $C_{1-8}$ alkoxy group, a $C_{5-12}$ cycloalkoxy group, a $C_{7-15}$ aralkoxy group, or -O-C(O)-$C_{1-18}$ alkyl group, or -O-T-$(OH)_b$ group; where T is a $C_{1-18}$ alkylene chain, $C_{5-18}$ cycloalkylene chain, or $C_{5-18}$ cycloalkenylene chain, or a $C_{1-4}$ alkylene chain substituted by phenyl group or by $C_{1-4}$ alkyl-substituted phenyl group; b is 1-3 and does not exceed the number of carbon atoms in T, and when b is 2 or 3, each hydroxyl group is linked to a different carbon atom of T.

The compound represented by the structural formula (vii) is disclosed in detail in the specification of European Patent No. 2225318, and, more specifically, exemplified in page 5, line 35 to page 25, line 48 of the specification of European Patent No. 2225318.

In an embodiment of the present invention, the hindered amine (C) can be a compound represented by the following structural formula (viii):

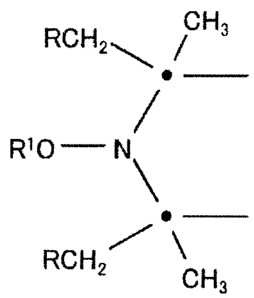

···(viii)

where R is hydrogen or methyl group, and $R^1$ is selected from the group consisting of $C_{1-18}$ alkyl group, $C_{2-18}$ alkenyl group, $C_{2-18}$ alkynyl group, $C_{5-12}$ cycloalkyl group, $C_{5-8}$ cycloalkenyl group, $C_{6-10}$ aryl group, and $C_{7-9}$ aralkyl group.

The compound represented by the above structural formula (viii) is disclosed in more detail in page 3, line 33 to page 8, line 58 of the specification of European Patent No. 0309402.

In an embodiment of the present invention, the hindered amine (C) can be a compound represented by the following structural formula (ix):

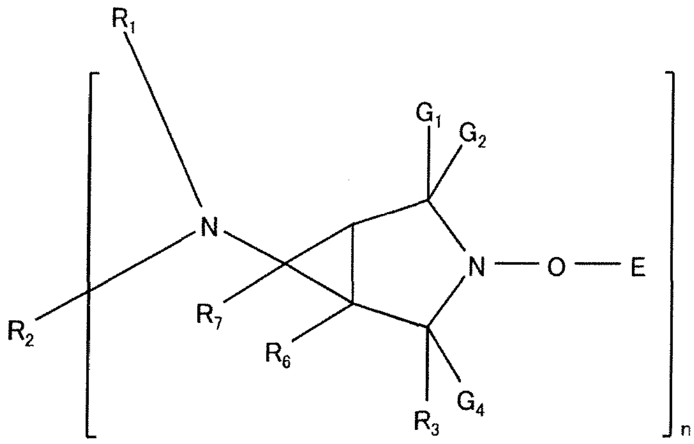

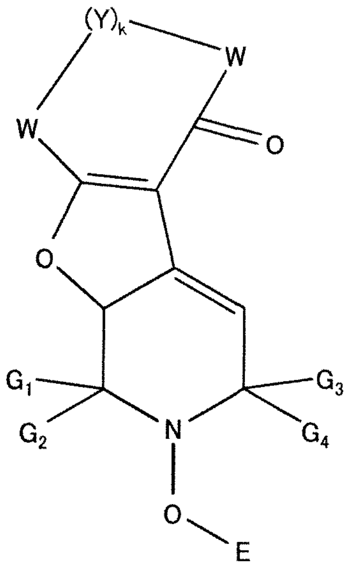

•••(ix)

where E, k, Y, W, $R_1$ to $R_7$, and $G_1$ to $G_4$ are as defined in U.S. Patent No. 8598369.

The compound represented by the above structural formula (ix) is exemplified in more detail in Examples 1 through 12 and Tables 1 through 5 in the specification of US Patent No. 8598369.

<Ratio between components in expanded particles>

(Ratio of organic phosphorus-based compound (B) to hindered amine (C))

In the present specification, the ratio of the organic phosphorus-based compound (B) to the hindered amine (C) (hereinafter referred to as a ratio "(B)/(C)") means the ratio of the weight of the organic phosphorus-based compound (B) contained in the expanded particles to the weight of the hindered amine (C) contained in the expanded particles. In the present expanded particles, the ratio "(B)/(C)" is not particularly limited.

In an embodiment of the present invention, the ratio "(B)/(C)" varies depending on the types of the organic phosphorus-based compound (B) and the hindered amine (C) contained in the expanded particles. Therefore, the ratio "(B)/(C)" cannot be specified definitely. The ratio "(B)/(C)" is preferably 1.0 to 20.0, more preferably 2.0 to 10.0, and even more preferably 3.0 to 5.0. In a case where the ratio "(B)/(C)" is 1.0 to 20.0, the resulting foamed molded product has excellent flame retardancy, and is capable of suppressing the ignition of a nearby flammable material which occurs due to burning particles when the foamed molded product is burned (i.e., the foamed molded product is excellent in self-extinguishing property). In addition, there is no risk of impairing various properties (mechanical property, shock-absorbing property, and the like) of the foamed molded product.

(Ratio of polypropylene-based resin (A) to sum of organic phosphorus-based compound (B) and hindered amine (C))

In the present specification, the ratio of the polypropylene-based resin (A) to the sum of the organic phosphorus-based compound (B) and the hindered amine (C) (hereinafter referred to as "ratio '(A)/{(B)+(C)}'") means the ratio of the weight of the polypropylene-based resin (A) contained in the present expanded particles to the total weight of the organic phosphorus-based compound (B) and the hindered amine (C) contained in the present expanded particles. In the present expanded particles, the ratio "(A)/{(B)+(C)}" is not particularly limited.

In an embodiment of the present invention, the ratio "(A)/{(B)+(C)}" is preferably 1 to 10, more preferably 1 to 7, and even more preferably 1 to 5. (i) In a case where the ratio "(A)/{(B)+(C)}" in the expanded particles is not more than 10, the resulting foamed molded product has superior flame retardancy. (ii) In a case where the ratio "(A)/{(B)+(C)}" in the expanded particles is not less than 1, the resulting foamed molded product has good surface appearance.

(Other additives)

The present expanded particles can contain any additives other than an organic phosphorus-based compound and a hindered amine, provided that the effects of the present invention are not impaired. Examples of such other additives include antioxidants, UV light absorbing agents, peroxide scavengers, inorganic nucleating agents, organic nucleating agents, water absorbing substances, antistatic agents, antioxidation agents, photo stabilizers, crystal nucleating agents, electrically conductive agents, and lubricants, fillers, carbon black, and powdered activated carbon. In the production of the present expanded particles, such other additives can be directly added to a blended product (described later) or to a polypropylene-based resin composition during production of resin particles. Alternatively, it is possible to prepare a masterbatch in advance by adding, at a high concentration, the additive(s) in another resin and then add the masterbatch resin to a blended product or to a polypropylene-based resin composition. The resin used in preparation of the masterbatch resin is preferably a polypropylene-based resin.

Examples of the antioxidants include alkylated monophenols, alkyltyhiomethylphenols, hydroquinones and alkylated hydroquinones, tocopherols, hydroxylated thiodiphenyl ethers, alkylidene bisphenols, O-, N- and S-containing benzyl compounds, hydroxybenzylated malonates, aromatic hydroxybenzyl compounds, acylaminophenols, amides and esters of hydroxyphenylpropionic acid, and aminated antioxidants. One type of these antioxidants can be used alone or in combination of two or more thereof.

The amount of the antioxidant contained in the present expanded particles is preferably 0.03% by weight to 1.00% by weight, more preferably 0.05% by weight to 0.70% by weight, and even more preferably 0.10% by weight to 0.50% by weight, with respect to 100% by weight as a total amount of the polypropylene-based expanded particles, because such amounts of the antioxidant contained in the present expanded particles can suppress the deterioration of the resulting foamed molded product at a high temperature (e.g., approximately 110°C), and, as a result, maintain flame retardancy for a longer period.

Examples of the UV light absorbing agents include benzotriazoles, benzophenones, benzoic acid esters, nickel complexes, hindered amines which have no OR group directly linked to N atoms (and which are not included in the hindered amine (C) in accordance with an embodiment of the present invention), and oxamides. One type of these UV light absorbing agents can be used alone or in combination of two or more thereof.

The amount of the UV light absorbing agent contained in the present expanded particles is preferably 0.01% by weight to 1.00% by weight, more preferably 0.05% by weight to 0.50% by weight, and even more preferably 0.10% by weight to 0.30% by weight, with respect to 100% by weight as a total amount of the polypropylene-based expanded particles because such amounts of the UV light absorbing agent can suppress ultraviolet-induced deterioration of the resulting foamed molded product and, as a result, maintain the flame retardancy for a longer period.

Examples of the inorganic nucleating agents include talc, titanium oxide, silica (silicon dioxide), silicates, alumina, diatomaceous earth, calcium carbonate, magnesium oxide, magnesium carbonate, magnesium sulfate, calcium phosphate, feldspar apatite, and barium sulfate. Examples of silicates include talc, magnesium silicate, kaolin, halloysite, dickite, aluminum silicate, and zeolite. One type of these inorganic nucleating agents can be used alone or in combination of two or more thereof.

The amount of the inorganic nucleating agent contained in the present expanded particles is preferably 0.005% by weight to 3.000% by weight, more preferably 0.010% by weight to 2.000% by weight, even more preferably 0.030% by weight to 1.000% by weight, and particularly preferably 0.030% by weight to 0.500% by weight, with respect to 100% by weight as a total amount of the polypropylene-based expanded particles, from the viewpoint of uniformity of average cell diameter. In particular, by setting the amount of the inorganic nucleating agent contained in the present expanded particles to be 0.030% by weight to 0.500% by weight, it is possible to achieve a uniform average cell diameter and provide a foamed molded product which has superior flame retardancy.

Examples of the organic nucleating agents include monocarboxylic acids or polycarboxylic acids (such as adipic acid or diphenylacetic acid) and salts thereof, and ion copolymers. One type of these organic nucleating agents can be used alone or in combination of two or more thereof.

The amount of the organic nucleating agent contained in the present expanded particles is preferably 0.005% by weight to 2.000% by weight, more preferably 0.010% by weight to 1.000% by weight, and most preferably 0.030% by

weight to 0.500% by weight, with respect to 100% by weight as a total amount of the polypropylene-based expanded particles, from the viewpoint of uniformity of average cell diameter.

Examples of the water absorbing substances include glycerin, diglycerin, polyethylene glycol, C12 to C18 fatty alcohols (e.g., pentaerythritol, cetyl alcohol, and stearyl alcohol), melamine, isocyanuric acid, melamine-isocyanuric acid condensate, and zinc borate. One type of these water absorbing substances can be used alone or in combination of two or more thereof.

Among these, glycerin and polyethylene glycol are preferable in that glycerin and polyethylene glycol do not accelerate a decrease in average cell diameter of expanded particles and have good affinity to the polypropylene-based resin (A).

The amount of the water absorbing substance contained in the present expanded particles is preferably 0.01% by weight to 1.00% by weight, more preferably 0.05% by weight to 0.70% by weight, and even more preferably 0.10% by weight to 0.60% by weight, with respect to 100% by weight as a total amount of the polypropylene-based expanded particles because such amounts of the water absorbing substance make it possible to efficiently obtain expanded particles having a small density (e.g., not more than 40.0 g/L). (i) In a case where the amount of the water absorbing substance contained is not less than 0.01 parts by weight, the expandability-imparting effect by the water absorbing substance can be sufficiently achieved. (ii) In a case where the amount of the water absorbing substance contained is not more than 1.00 part by weight, the resulting expanded particles will not excessively shrink. It should be noted that, in a case of preparing expanded particles having a relatively high density (e.g., a density of more than 40.0 g/L and not more than 400.0 g/L), expanded particles can be efficiently obtained without the addition of a water absorbing substance.

Examples of the lubricants include fatty acid esters, polyethylene waxes (which may be optionally partly saponified), zinc stearate, glycerol esters, and alkaline earth metal soaps. One type of these lubricants can be used alone or in combination of two or more thereof.

The amount of the lubricant contained in the present expanded particles is preferably 0.01% by weight to 1.00% by weight, more preferably 0.05% by weight to 0.50% by weight, and even more preferably 0.10% by weight to 0.30% by weight, with respect to 100% by weight as a total amount of the polypropylene-based expanded particles, because such amounts of lubricant make it possible to improve the dispersibility of the another additive.

Examples of the filler include silicates, glass fibers, kaolin, wood flour, graphite, graphene, and cellulose nanofibers. One type of these fillers can be used alone or in combination of two or more thereof.

The amount of the filler contained in the present expanded particles is, for example, preferably 0.01% by weight to 10.00% by weight, more preferably 0.05% by weight to 7.00% by weight, and even more preferably 0.10% by weight to 5.00% by weight, with respect to 100% by weight as a total amount of the present expanded particles.

The present expanded particles can further contain a pigment such as carbon black or graphite in order to color the resulting foamed molded product in gray or black. The amount of carbon black contained in the present expanded particles is preferably 0.01% by weight to 6.00% by weight, more preferably 0.30% by weight to 4.00% by weight, and even more preferably 0.50% by weight to 3.00% by weight, with respect to 100% by weight as a total amount of the present expanded particles, from the viewpoint of not impairing flame retardancy and from the viewpoint of uniform coloring.

The present expanded particles can further contain powdered activated carbon in order to further improve the flame retardancy of the resulting foamed molded product. The amount of powdered activated carbon contained in the present expanded particles is preferably 0.8% by weight to 2.8% by weight and more preferably 1.0% by weight to 2.5% by weight, with respect to 100% by weight as a total amount of the present expanded particles.

<Physical properties of polypropylene-based expanded particles>

(Average cell diameter)

The average cell diameter of the present expanded particles is not particularly limited, and is preferably 150 μm to 600 μm, more preferably 180 μm to 450 μm, and even more preferably 200 μm to 400 μm. (i) In a case where the average cell diameter of the present expanded particles is not less than 150 μm, it is possible to obtain a foamed molded product having excellent surface appearance. (ii) In a case where the average cell diameter of the present expanded particles is not more than 600 μm, secondary expandability during in-mold foam molding of the expanded particles becomes favorable, so that it is possible to obtain a foamed molded product having excellent surface appearance. It can also be said that the average cell diameter of expanded particles is the average diameter of the cells of expanded particles.

In the present specification, the average cell diameter of expanded particles is measured according to the following (1) through (5): (1) An expanded particle is cut at the center thereof with the use of a razor (such as a high stainless steel double-beveled blade manufactured by FEATHER Safety Razor Co., Ltd.); (2) Then, the resulting cross section of the expanded particle is observed with the use of an optical microscope (VHX-5000 manufactured by Keyence Corporation) at a magnification of 50 times; (3) In the image obtained by the observation, a straight line is drawn through the center or substantially center of the cross section of the expanded particle; (4) (4-1) The number (n) of cells present on the line is

measured. (4-2) The length of a line segment cut from the straight line by the intersections of the straight line and the surface of the expanded particle is measured and regarded as a diameter L of the expanded particle; (5) The average cell diameter of expanded particles is calculated by the following formula:

$$\text{Average cell diameter } (\mu m) = L/n.$$

(High temperature-side melting heat quantity of expanded particles)

The high temperature-side melting heat quantity of the present expanded particles is preferably 5.0 J/g to 25.0 J/g, more preferably 8.0 J/g to 22.0 J/g, and even more preferably 10.0 J/g to 20.0 J/g. (i) In a case where the high temperature-side melting heat quantity of the expanded particles is not less than 5.0 J/g, it is possible to suppress the occurrence of sink marks in the surfaces of the resulting foamed molded product during the in-mold foam molding of the foamed molded product and suppress the dimensional shrinkage. In a case where the high temperature-side melting heat quantity of the expanded particles is not more than 25.0 J/g, it is possible to obtain a foamed molded product which has excellent internal fusibility and a smooth surface. It can also be said that the high temperature-side melting heat quantity is the high temperature-side melting peak heat quantity.

In the present specification, the high temperature-side melting heat quantity of the expanded particles is a value measured by the following procedures (1) through (5): (1) Approximately 5 mg of the expanded particles is measured out; (2) The temperature of the expanded particles thus measured out is increased from 10°C to 190°C at a temperature increase rate of 10°C/minute, so that the expanded particles are melted; (3) In a DSC curve of the expanded particles obtained in the process (2), a baseline is created by connecting, using a straight line, a point representing the temperature before the start of the melting and a point representing the temperature after the end of the melting; (4) A straight line which passes through the maximum point between the melting peak on the high-temperature side or the melting peak at the highest temperature and the adjacent melting peak is drawn perpendicularly to the X-axis; and (5) The quantity of heat (J/g) calculated from the high-temperature side region enclosed by the straight line passing through the baseline and the maximum point and the DSC curve is regarded as the high temperature-side melting heat quantity of the expanded particles.

(Particle weight of expanded particle)

The particle weight of the present expanded particle (particle weight per particle of expanded particles) is not particularly limited, and is preferably 0.5 mg to 10.0 mg, more preferably 0.5 mg to 5.0 mg, and even more preferably 0.5 mg to 2.0 mg per particle of the present expanded particles, from the viewpoint of a mold-filling property and the surface appearance of the resulting foamed molded product.

In the present specification, the particle weight of the expanded particle (particle weight per particle of expanded particles) can be, for example, measured by the following procedures (1) through (5): (1) The weight of 100 randomly sampled expanded particles is measured with use of an electronic balance; and (2) The particle weight per particle of the expanded particles is calculated on the basis of the following formula:

Particle weight (mg) per particle of expanded particles = (Weight (mg) of 100 expanded particles) / 100.

The expanded particles in accordance with another embodiment of the present invention can have the following feature: The polypropylene-based expanded particles contain the polypropylene-based resin (A) in an amount of 100 parts by weight, the organic phosphorus-based compound (B) in an amount of more than 10.0 parts by weight and not more than 20.0 parts by weight, and the hindered amine (C) in an amount of 1.0 parts by weight to 10.0 parts by weight.

[3. Method for producing polypropylene-based expanded particles]

A polypropylene-based expanded particle production method in accordance with an embodiment of the present invention includes: a dispersion step of dispersing polypropylene-based resin particles, an aqueous dispersion medium, and a blowing agent in a vessel; and a releasing step of releasing, into a region having a pressure lower than an internal pressure of the vessel, a dispersion slurry obtained in the dispersion step, wherein the polypropylene-based resin particles contain an organic phosphorus-based compound (B) in an amount of more than 10.0% by weight and not more than 20.0% by weight and a hindered amine (C) in an amount of 1.0% by weight to 10.0% by weight with respect to 100% by weight as a total amount of the polypropylene-based resin particles.

In the present specification, the "method for producing polypropylene-based expanded particles in accordance with an embodiment of the present invention" may be referred to as the "present production method".

(Granulation step)

The present production method can include a granulation step of preparing polypropylene-based resin particles before the expansion step. In the present specification, the "polypropylene-based resin particles" may be referred to as "resin particles".

The granulation step in the present production method is not particularly limited, provided that it is possible to obtain resin particles containing the organic phosphorus-based compound (B) in an amount of more than 10.0% by weight and not more than 20.0% by weight and the hindered amine (C) in an amount of 1.0% by weight to 10.0% by weight, with respect to 100% by weight as a total amount of the polypropylene-based resin particles. Examples of the granulation step include a method in which an extruder is used. Specifically, resin particles can be prepared by the following procedures (1) through (5): (1) A blended product is prepared by blending predetermined amounts of the polypropylene-based resin (A), the organic phosphorus-based compound (B), and the hindered amine (C), and, as necessary, another additive; (2) The blended product is introduced into an extruder, and the blended product is melted and kneaded so as to prepare a polypropylene-based resin composition; (3) The polypropylene-based resin composition is extruded from a die provided in the extruder; (4) The extruded polypropylene-based resin composition is cooled by, for example, passing the polypropylene-based resin composition through water, so as to solidify the polypropylene-based resin composition; and (5) Subsequently, with use of a cutter, the solidified polypropylene-based resin composition is finely cut into a desired shape such as a cylindrical shape, an elliptical shape, a spherical shape, a cuboid shape, a rectangular parallelepiped shape, or the like, so that polypropylene-based resin particles are obtained. Alternatively, the resin particles can be obtained as follows: In the procedure (3), the polypropylene-based resin composition which has been melted and kneaded is extruded directly into water from the die provided in the extruder, and immediately thereafter cut into particles, cooled, and solidified. Melting and kneading a blended product in this manner makes it possible to obtain resin particles which are more uniform.

It should be noted that the ratio between the amounts of the polypropylene-based resin (A), the organic phosphorus-based compound (B), and the hindered amine (C) contained in the resin particles is the ratio between the amounts of the polypropylene-based resin (A), the organic phosphorus-based compound (B), and the hindered amine (C) in the blended product prepared in the step (1), and can also be said to be the ratio between the amounts of the polypropylene-based resin (A), the organic phosphorus-based compound (B), and the hindered amine (C) contained in the expanded particles. Therefore, with respect to the aspects of the components, that is, the polypropylene-based resin (A), the organic phosphorus-based compound (B), and the hindered amine (C) components, in the resin particles, the above descriptions in the <Polypropylene-based resin (A)> section, the <Organic phosphorus-based compound (B)> section, and the <Hindered amine (C)> section can be applied as appropriate.

It should be noted that, in order to uniformly disperse the organic phosphorus-based compound (B) and the hindered amine (C) in the resin particles, it is possible to melt and knead the organic phosphorus-based compound (B) and the hindered amine (C) in advance in the extruder and prepare the mixture. The mixture and the polypropylene-based resin (A) and, as necessary, other additive(s) can also be melted and kneaded to prepare the resin particles.

(Physical properties of polypropylene-based resin particles)

(Melting point of resin particles)

The melting point of the resin particles is not particularly limited, and is preferably 122.0°C to 159.0°C, more preferably 127.0°C to 157.0°C, more preferably 132.0°C to 151.0°C, and more preferably 135.0°C to 148.0°C, and even more preferably 136.0°C to 145.0°C, and particularly preferably 138.0°C to 144.0°C. (i) In a case where the melting point of the resin particles is not less than 122.0°C, it is possible to obtain a foamed molded product having excellent dimensional stability at a high temperature. (ii) In a case where the melting point of the resin particles is not more than 159.0°C, the foamed molded product can be subjected to in-mold foam molding at a low steam pressure.

In the present specification, the melting point of the resin particles is a value measured and obtained by a differential scanning calorimetry (hereinafter referred to as "DSC method"). Specific procedures are as follows: (1) the temperature of 5 mg to 6 mg of the resin particles is increased from 40.0°C to 220.0°C at a temperature increase rate of 10.0°C/min so that the resin particles is melted; (2) thereafter, the temperature of the melted resin particles is decreased from 220.0°C to 40.0°C at a temperature decrease rate of 10.0°C/min so that the resin particles are crystallized; and (3) then, the temperature of the crystallized resin particles is increased from 40.0°C to 220.0°C at a temperature increase rate of 10°C/min. It is possible to determine, as the melting point of the resin particles, the temperature at a peak (melting peak) in a DSC curve of the resin particles which DSC curve is obtained in the second temperature increase (i.e., in (3)). It should be noted that, in a case where a plurality of peaks (melting peaks) are present in a DSC curve of the resin particles obtained during the second temperature increase by the above-described method, the temperature at a peak (melting peak) having the greatest melting heat quantity is regarded as a melting point of the resin particles. As a differential scanning calorimeter, for example, a differential scanning calorimeter of a DSC6200 type manufactured by Seiko Instruments Inc. can be used.

(Dispersion step)

It can be said that the dispersion step is, for example, a step of preparing a dispersion slurry in which resin particles and a blowing agent are dispersed in an aqueous dispersion medium and, as necessary, a dispersing agent and/or a dispersion auxiliary agent are dispersed.

The vessel is not limited to any particular one, and is preferably a vessel which can withstand the expansion temperature and the expansion pressure described later. The vessel is, for example, preferably a pressure-resistant vessel and more preferably an autoclave-type pressure-resistant vessel.

The aqueous dispersion medium is not limited to any particular one, provided that the aqueous dispersion medium allows the resin particles, a blowing agent, and the like to be uniformly dispersed. Examples of the aqueous dispersion medium include (a) a dispersion medium obtained by adding methanol, ethanol, ethylene glycol, glycerin or the like to water and (b) water such as tap water and industrial water. Preferable examples of the aqueous dispersion medium include: pure water such as RO water (water purified by the reverse osmosis membrane method), distilled water, and deionized water (water purified by the ion exchange resin); and ultrapure water. This is because such aqueous dispersion media make it possible to stably produce expanded particles.

The amount of the aqueous dispersion medium to be used is not particularly limited, and is preferably 100 parts by weight to 500 parts by weight, with respect to 100 parts by weight of resin particles. (a) Using the aqueous dispersion medium in an amount of not less than 100 parts by weight prevents a decrease in the stability of the dispersion slurry (in other words, the resin particles are well dispersed). (b) Using the aqueous dispersion medium in an amount not more than 500 parts by weight prevents the productivity from decreasing.

Examples of the blowing agent include (a) inorganic blowing agents such as (a-1) inorganic gas such as nitrogen, carbon dioxide, air (mixture of oxygen, nitrogen, and carbon dioxide) and (a-2) water and (b) organic blowing agents such as (b-1) saturated hydrocarbon having 3 to 5 carbon atoms such as propane, normal butane, isobutane, normal pentane, isopentane, and neopentane, (b-2) ethers such as dimethyl ether, diethyl ether, and methyl ethyl ether, and (b-3) halogenated hydrocarbons such as monochloromethane, dichloromethane, and dichlorodifluoroethane. As the blowing agent, at least one blowing agent selected from the group consisting of the inorganic blowing agents and the organic blowing agents described above can be used. In a case where two or more blowing agents are used in mixture, the mixing ratio can be adjusted as appropriate according to a purpose. From the viewpoint of environmental impact and expandability, the inorganic blowing agents are preferable among the blowing agents described above. The blowing agent is more preferably an inorganic blowing agent that contains carbon dioxide, and even more preferably carbon dioxide, in that such blowing agents have a plasticizing effect to a proper extent and make it easy to improve the expandability of the expanded particles in the production of the present expanded particles.

The amount of the blowing agent to be used is not particularly limited, and can be adjusted as appropriate according to (a) the type of the blowing agent and/or (b) a desired expansion ratio of the expanded particles. The amount of the blowing agent to be used is, for example, preferably 1 part by weight to 10000 parts by weight, more preferably 1 part by weight to 5000 parts by weight, and even more preferably 1 part by weight to 1000 parts by weight, with respect to 100 parts by weight of the resin particles. In a case where the amount of the blowing agent to be used is not less than 1 part by weight with respect to 100 parts by weight of resin particles, it is possible to obtain expanded particles having suitable density. In a case where the amount of the blowing agent to be used is not more than 10000 parts by weight with respect to 100 parts by weight of resin particles, an effect according to the amount of the blowing agent used can be achieved, and is therefore no economic waste will be incurred. The amount of the blowing agent to be used can be, for example, 1 part by weight to 100 parts by weight or 1 part by weight to 10 parts by weight, with respect to 100 parts by weight of the resin particles.

In a case where water is used as the blowing agent, water in the dispersion slurry in the vessel can be used as a blowing agent. Specifically, in a case where the water in the dispersion slurry is to be used as the blowing agent, it is preferable for the resin particles to contain a water absorbing substance in advance. This allows the resin particles to more easily absorb the water in the dispersion slurry in the vessel. As a result, it becomes easier to use the water as the blowing agent.

In the method for producing the present expanded particles, it is preferable to use a dispersing agent. Using a dispersing agent is advantageous in that it is possible to reduce the agglomeration (which may hereinafter be referred to as blocking) of the resin particles so as to be able to stably produce expanded particles. Examples of the dispersing agent include inorganic substances such as tertiary calcium phosphate, tertiary magnesium phosphate, basic magnesium carbonate, calcium carbonate, barium sulfate, kaolin, talc, clay, aluminum oxide, titanium oxide, and aluminum hydroxide. One type of these dispersing agents can be used alone or in mixture of two or more thereof. In a case where two or more dispersing agents are used in mixture, the mixing ratio can be adjusted as appropriate according to a purpose.

The amount of the dispersing agent to be used in a dispersion slurry used in an embodiment of the present invention is preferably 0.01 parts by weight to 3.00 parts by weight, more preferably 0.05 parts by weight to 2.00 parts by weight, and even more preferably 0.10 parts by weight to 1.50 parts by weight, with respect to 100 parts by weight of the resin particles. (a) In a case where the amount of the dispersing agent to be used is not less than 0.01 parts by weight, there

is no risk of inducing poor dispersion of resin particles. (b) In a case where the amount of the dispersing agent to be used is not more than 3.00 parts by weight, there is no risk of inducing poor fusion between expanded particles during in-mold foam molding using the obtained expanded particles.

In the method for producing the present expanded particles, it is preferable to use a dispersion auxiliary agent in order to (a) improve the effect of reducing the agglomeration of resin particles and/or (b) improve the stability of the dispersion slurry in the vessel. Examples of the dispersion auxiliary agent include an anionic surfactant. Examples of the anionic surfactant include sodium alkylbenzene sulfonates such as sodium dodecylbenzene sulfonate (DBS), sodium alkane sulfonates, sodium alkyl sulfonates, sodium alkyl diphenyl ether disulfonates, and sodium $\alpha$-olefin sulfonates. One type of these dispersion auxiliary agents can be used alone or in mixture of two or more thereof. In a case where two or more dispersion auxiliary agents are used in mixture, the mixing ratio can be adjusted as appropriate according to a purpose.

The amount of the dispersion auxiliary agent to be used in the dispersion slurry used in an embodiment of the present invention is preferably 0.001 parts by weight to 0.500 parts by weight, more preferably 0.001 parts by weight to 0.200 parts by weight, and even more preferably 0.010 parts by weight to 0.200 parts by weight, with respect to 100 parts by weight of the resin particles. In a case where the amount of the dispersion auxiliary agent to be used falls within the above ranges, there is no risk of inducing poor dispersion of the resin particles.

A decrease in the stability of the dispersion slurry may result in a plurality of resin particles agglomerating or forming lumps in the vessel. This may result in, for example, (i) the production of agglomerated expanded particles, (ii) an inability to produce expanded particles due to lumps of the resin particles remaining in the vessel, or (iii) a decrease in productivity during production of expanded particles.

In the method for producing the present expanded particles, it is preferable to use tertiary calcium phosphate and kaolin in combination as a dispersing agent and to use sodium dodecylbenzene sulfonate as a dispersion auxiliary agent. This is because, in such cases, (i) the agglomeration of resin particles can be further reduced so as to be able to more stably produce expanded particles and (ii) the stability of the dispersion slurry in the vessel can be further increased. In other words, the dispersion slurry prepared in the dispersion step in the method for producing the present expanded particles preferably contains tertiary calcium phosphate, kaolin, and sodium dodecylbenzene sulfonate.

(Temperature-increasing and pressure-increasing step and maintaining step)

It is preferable that the present production method be carried out after the dispersion step and before the releasing step and further include: (i) a temperature-increasing and pressure-increasing step of increasing the internal temperature of the vessel to a certain temperature and increasing the internal pressure of the vessel to a certain pressure and (ii) a maintaining step of maintaining the internal temperature and the internal pressure of the vessel at the certain temperature and the certain pressure. The maintaining step is preferably carried out after the temperature-increasing and pressure-increasing step. In the present specification, (a) the certain temperature in the temperature-increasing and pressure-increasing step and the maintaining step may be referred to as an expansion temperature and (b) the certain pressure in the temperature-increasing and pressure-increasing step and the maintaining step may be referred to as an expansion pressure.

The expansion temperature cannot be specified definitely because the expansion temperature varies depending on, for example, the types of the polypropylene-based resin (A), the organic phosphorus-based compound (B), the type of hindered amine (C) and the type of the blowing agent which are contained in the resin particles. (i) The expansion temperature is preferably in a range of 20.0°C below to 20.0°C above the melting point of (a) the mixture of the polypropylene-based resin (A), the organic phosphorus-based compound (B), and the hindered amine (C), (b) the polypropylene-based resin composition, or (c) the resin particles. (ii) the expansion temperature is more preferably in a range of 10.0°C below to 15.0°C above the melting point of (a) the mixture of the polypropylene-based resin (A), the organic phosphorus-based compound (B), and the hindered amine (C), (b) the polypropylene-based resin composition, or (c) the resin particles. (iii) The expansion temperature is even more preferably in the range of 5.0°C below to 13.0°C above the melting point of (a) the mixture of the polypropylene-based resin (A), the organic phosphorus-based compound (B), and the hindered amine (C), (b) the polypropylene-based resin composition, or (c) the resin particles.

The expansion pressure is preferably 0.5 MPa (gage pressure) to 10.0 MPa (gage pressure), more preferably 0.6 MPa (gage pressure) to 5.0 MPa (gage pressure), and even more preferably 0.6 MPa (gage pressure) to 2.5 MPa (gage pressure). With an expansion pressure of not less than 0.5 MPa (gage pressure), it is possible to obtain expanded particles having suitable density.

In the maintaining step, a period of time (maintaining time) for which the dispersion slurry in the vessel is maintained at around the expansion temperature and the expansion pressure is not particularly limited. The maintaining time is preferably 10 minutes to 60 minutes, more preferably 12 minutes to 50 minutes, and even more preferably 15 minutes to 40 minutes. In a case where the maintaining time is not less than 10 minutes, there is a sufficient amount of unmelted crystals (crystals of the polypropylene-based resin). This brings about the advantage of being able to reduce the shrinkage of the resulting expanded particles and/or an increase in the open cell ratio. Meanwhile, in a case where the

maintaining time is not more than 60 minutes, there is no excessive amount unmelted crystals. This brings about the advantage of being able to mold the expanded particles at a low molding temperature.

(Releasing step)

(a) In a case where the temperature-increasing and pressure-increasing step is carried out but the maintaining step is not carried out, the releasing step is preferably carried out after the temperature-increasing and pressure-increasing step. (b) In a case where the temperature-increasing and pressure-increasing step and the maintaining step are both carried out, the releasing step is preferably carried out after the maintaining step. The releasing step makes it possible to expand the resin particles, and as a result, expanded particles are obtained. It can also be said that the releasing step is a step of releasing one end of the vessel so as to release the dispersion slurry inside the vessel into a region (space) having a pressure lower than the expansion pressure (i.e., the internal pressure of the vessel).

In the releasing step, a "region having a pressure lower than the expansion pressure" is intended to mean a "region under a pressure lower than the expansion pressure" or a "space under a pressure lower than the expansion pressure", and can also be described as "in an atmosphere having a pressure lower than the expansion pressure". The region having a pressure lower than the expansion pressure is not particularly limited, provided that the pressure is lower than the expansion pressure. The region having a pressure lower than the expansion pressure can be, for example, a region under atmospheric pressure.

In a case where, in the releasing step, the dispersion slurry is released into a region having a pressure lower than the expansion pressure, it is also possible to release the dispersion slurry through an orifice measuring 1 mm to 5 mm in diameter for the purpose of, for example, adjusting the flow rate of the dispersion slurry and reducing the variance in the expansion ratio of the resulting expanded particles. The low-pressure region (space) can be filled with saturated steam for the purpose of improving the expandability.

(Expansion step)

The steps from the dispersion step to the releasing step can be referred to as an expansion step. In addition, a process of producing resin expanded particles from resin particles in this manner will be referred to as a "first-step expansion process," and the expanded particles thus obtained will be referred to as "first-step expanded particles".

(Second-step expansion process)

In order to obtain expanded particles having a high expansion ratio, it is possible to employ a method in which a large amount of inorganic blowing agent is used during the first-step expansion process (this method will be hereinafter referred to as "Method 1"). Examples of methods other than the Method 1 which can be used include a method in which expanded particles (first-step expanded particles) having a relatively low expansion ratio (an expansion ratio of approximately 2.0 to 35.0 times) are obtained in the first-step expansion process, and thereafter, the obtained first-step expanded particles are expanded again to increase the expansion ratio (this method is hereinafter referred to as "Method 2").

Examples of Method 2 include a method including the following steps (a1) through (a3): (a1) In a first-step expansion process, first-step expanded particles having an expansion ratio of 2.0 to 35.0 times are produced. (a2) The first-step expanded particles are placed into a pressure-resistant vessel, and the pressure inside the first-step expanded particles (hereinafter, also referred to as "internal pressure") is increased to greater than normal pressure by carrying out a pressure treatment at 0.2 MPa (gage pressure) to 0.6 MPa (gage pressure) with use of e.g., nitrogen, air, or carbon dioxide. (a3) Then, after the internal pressure is increased, the first-step expanded particles are further expanded by heating the particles with use of, for example, steam. A step of increasing the expansion ratio of first-step expanded particles as in Method 2 is referred to here as a "second-step expansion process", and the polypropylene-based resin expanded particles obtained via the Method 2 are referred to as "second-step expanded particles".

In the step (a3) of the second-step expansion process, the pressure of the steam for heating the first-step expanded particles is preferably adjusted to a range of 0.03 MPa (gage pressure) to 0.20 MPa (gage pressure), in accordance with the expansion ratio of the second-step expanded particles. In a case where the pressure of the steam in the second-step expansion process is not lower than 0.03 MPa (gage pressure), there is a tendency that the expansion ratio is likely to improve. In a case where the pressure of the steam in the second-step expansion process is not higher than 0.20 MPa (gage pressure), the likelihood that the resulting second-step expanded particles will agglomerate decreases. Note that, in a case where the second-step expanded particles agglomerate, the resulting second-step expanded particles may not be capable of being subjected to subsequent in-mold foam molding.

The internal pressure obtained by impregnating the first-step expanded particles with nitrogen, air, carbon dioxide, or the like is desirably adjusted as appropriate in view of the expansion ratio of the second-step expanded particles

and the steam pressure of the second-step expansion process. The internal pressure of the first-step expanded particles is preferably 0.15MPa (absolute pressure) to 0.60MPa (absolute pressure), more preferably 0.20MPa (absolute pressure) to 0.60MPa (absolute pressure), and even more preferably 0.30MPa (absolute pressure) to 0.60MPa (absolute pressure). In a case where the internal pressure of the first-step expanded particles is not less than 0.15MPa (absolute pressure), steam having high pressure is not needed to improve the expansion ratio. This reduces the likelihood that the second-step expanded particles will agglomerate. In a case where the internal pressure of the first-step expanded particles is not more than 0.6 MPa (absolute pressure), the likelihood that the second-step expanded particles will become an open-cell foam decreases. This reduces the likelihood of a decrease in the rigidity (such as compressive strength) of the in-mold foamed molded product which is ultimately obtained. Note that an open-cell foam can also be described as having cells in communication with each other.

[4. Polypropylene-based foamed molded product]

The polypropylene-based foamed molded product in accordance with an embodiment of the present invention is a foamed molded product obtained by molding (e.g., in-mold foam molding) of the present expanded particles. In the present specification, the "polypropylene-based foamed molded product in accordance with an embodiment of the present invention" may be referred to as the "present foamed molded product".

The present foamed molded product has the above feature, and therefore has the advantage of having excellent flame retardancy.

(Flame retardancy of foamed molded product)

In the present specification, the flame retardancy of the foamed molded product is evaluated by an oxygen index and by the UL94 "vertical burning foamed material test".

(Oxygen index)

An oxygen index indicates the minimum oxygen concentration (capacity%) necessary for sustaining the burning of a material (foamed molded product). It should be noted that the term "sustained burning" means that the burning time of a material that has been ignited is not more than 180 seconds and the burning distance of the material is not more than 50 mm.

The oxygen index of the present foamed molded product is preferably not less than 26.0%, more preferably not less than 26.5%, and even more preferably not less than 27.0%. The foamed molded product having an oxygen index of not less than 26.0% can be described as a foamed molded product having excellent flame retardancy and can also be described as a foamed molded product having excellent non-ignition properties. In order to be able to provide a foamed molded product having superior flame retardancy, a higher oxygen index is preferable, and the upper limit of the oxygen index is not particularly limited and can be, for example, not more than 45.0% or not more than 35.0%.

In the present specification, the oxygen index is a value measured in accordance with JIS K7201 (test method for flammability by the oxygen index).

(UL94)

The test method in UL94 "vertical burning foamed material test" includes the following procedures (1) through (5): (1) A test sample (foamed molded product) having a desired thickness (thickness (t) of the sample = 13 mm, 8 mm, or 5 mm) is fixed at the upper part thereof with use of a fixing clamp, the test sample is held vertically, and absorbent cotton is provided immediately below the test sample; (2) Flame of a gas burner is brought into contact, for 10 seconds, with the bottom end of the test sample being held, so as to burn the test sample (first burning); (3) The burning time and the red-hot time of the test sample are measured (the time during which the flame was in contact with the test sample (10 seconds) is not included in the burning time), and if the burning of the test sample stops within 30 seconds, the flame of the gas burner is brought into contact with the bottom end of the test sample again for 10 seconds to burn the sample (second burning); (4) The burning time and the red-hot time of the test sample are measured again; and (5) The procedures (1) through (4) are repeated five times total using different test samples, and the flame retardancy is evaluated in accordance with the evaluation standard below.

Evaluation criteria

[Unacceptable (no-good)]:

During the first burning or the second burning, the samples continue to burn for not less than 30 seconds or some samples burn to the position of the fixing clamp.

[V-2]:

No samples continue to burn for not less than 30 seconds after the first contact burning,

the sum of the burning times after 10 times of contact burning of five samples is not more than 250 seconds,
no samples burn to the position of the fixing clamp,
after the second contact burning, there is no sample for which the sum of the burning time and the red-hot time is not less than 250 seconds, and
there is/are a sample(s) whose particles that fell during the burning caused the absorbent cotton placed below the test sample to combust.

[V-1]:

No samples continue to burn for not less than 30 seconds after the first contact burning or the second contact burning,

the sum of the burning times after 10 times of contact burning of five samples is not more than 250 seconds,
no samples burn to the position of the fixing clamp,
after the second contact burning, there is no sample for which the sum of the burning time and the red-hot time is not less than 250 seconds, and
there is no sample whose particles that fell during any burning caused the absorbent cotton placed below the test sample to combust.

[V-0]:

No samples continue to burn for not less than 10 seconds after the first contact burning or the second contact burning,

the sum of the burning times after 10 times of contact burning of five samples is not more than 50 seconds,
no samples burn to the position of the fixing clamp,
after the second contact burning, there is no sample for which the sum of the burning time and the red-hot time is not less than 30 seconds, and
there is no sample whose particles that fell during any burning caused the absorbent cotton placed below the test sample to combust.

As stated above, none of the foamed molded product samples which satisfies the standard V-0 continues to burn for not less than 10 seconds and results in the sum of the burning time and the red-hot time to be not less than 30 seconds after the contact burning. That is, it can be said that such a molded product has superior flame retardancy in comparison with a foamed molded product which satisfies only V-2 and/or V-1.

Furthermore, a molded product which satisfies V-0 does not cause, with the particles that fall during any burning, the absorbent cotton placed below the test sample to combust. That is, it can be said that such a molded product has a self-extinguishing property so excellent that even if flammable particles are generated during burning, the flames of the particles are extinguished before the particles reach the absorbent cotton (flammable material).

That is, it can be said that a foamed molded product which satisfies V-0 is superior in flame retardancy and self-extinguishing property in comparison with a foamed molded product which satisfies only V-2 and/or V-1.

In the present specification, the flame retardancy of all test samples having thicknesses of 13 mm, 8 mm, or 5 mm are measured in accordance with UL94, and a foamed molded product which satisfies the standard V-0 can be evaluated as having excellent flame retardancy.

In a case where the foamed molded product satisfies any of the following conditions (a) and/or (b), it can be determined that the foamed molded product is excellent in flame retardancy: (a) the oxygen index is not less than 26.0%; and (b) the standard V-0 is satisfied by all the test samples having thicknesses of 13 mm, 8 mm, or 5 mm. That is, the present foamed molded product satisfies the above (a) and/or (b). The present foamed molded product preferably satisfies both (a) and (b), because, in such a case, the foamed molded product is superior in flame retardancy.

(Density of foamed molded product)

The present foamed molded product preferably has a density of 15.0 g/L to 400.0 g/L. A density of not less than 15.0 g/L of a molded product has the advantage that it is possible to obtain a foamed molded product that has smoothness and no shrinkage of the surface of the foamed molded product and is excellent in surface appearance. A density of not more than 400.0 g/L makes it possible to obtain a foamed molded product that is sufficiently reduced in weight. The density of the present foamed molded product can be (I) 15.0 g/L to 92.0 g/L or (II) more than 92.0 g/L and not more than 400.0 g/L. In a case where the density of the present foamed molded product falls within the range (I), it is possible to obtain a foamed molded product that is superior in lightweight property and shock-absorbing property. In a case where the density falls within the range (II), it is possible to obtain a foamed molded product that is superior in strength, dimensional stability, and self-extinguishing property.

It should be noted that, in the present specification, the density of the foamed molded product is a value measured in accordance with the following procedures (1) to (3): (1) The length (mm) in the length direction (mm), the width direction (mm), and the thickness direction of the foamed molded product are measured and the volume V (L) of the foamed molded product is calculated; (2) The weight W (g) of the foamed molded product is measured; and (3) The density of the foamed molded product is calculated on the basis of the following formula: Density of foamed molded product (g/L) = W/V.

<Method for producing foamed molded product>

A method for producing the present foamed molded product is not particularly limited, and a known method can be applied. Specific examples of the aspects of the method for producing the present foamed molded product include, but are not limited to, a production method (in-mold foam molding method) that includes the following steps (b1) through (b6) in this order:

(b1) a mold constituted by a stationary mold that cannot be driven and a movable mold that can be driven is mounted on an in-mold foam molding device. It should be noted that the stationary mold and the movable mold can form a molding space inside the stationary mold and the movable mold by driving the movable mold toward the stationary mold (this operation may be referred to as "mold closing");
(b2) the stationary mold is driven toward the movable mold so as to form a slight gap (also referred to as "cracking") such that the stationary mold and the movable mold are not completely closed together;
(b3) a molding space formed inside the stationary mold and the movable mold is filled with expanded particles through, for example, a filling machine;
(b4) the movable mold is driven such that the stationary mold and the movable mold are completely closed (i.e., complete mold closing are performed);
(b5) in-mold foam molding is performed by, after the mold is preheated with steam, subjecting the mold to one-side heating and other-side heating with steam and then subjecting the mold to both-side heating with steam; and
(b6) The in-mold foamed molded object is taken out from the mold and dried (e.g., dried at 75°C) to obtain a foamed molded product.

Examples of the method for filling the molding space with the expanded particles in the above (b3) include the following methods (b3-1) through (b3-4):

(b3-1) a method in which the expanded particles (including the above-described second-step expanded particles; the same applied below) are pressurized with an inorganic gas in a vessel to impregnate the expanded particles with the inorganic gas and impart a predetermined internal-expanded particle pressure, and then the molding space is filled with the expanded particles;
(b3-2) a method in which the molding space is filled with the expanded particles and then the volume of the inside of the mold is compressed to be reduced by 10% to 75%;
(b3-3) a method in which the expanded particles are compressed with gas pressure and caused to fill the molding space;
(b3-4) a method in which the molding space is filled with the expanded particles without any particular pretreatment.

Examples of the inorganic gas in the method (b3-1) in the method for producing the present foamed molded product include at least one type selected from the group consisting of air, nitrogen, oxygen, carbon dioxide, helium, neon, argon, and the like can be used as the inorganic gas. Among these inorganic gases, air and/or carbon dioxide are preferable.

The internal-expanded particle pressure in the method (b3-1) in the method for producing the present foamed molded product is preferably 0.11MPa (absolute pressure) to 0.40MPa (absolute pressure) and preferably 0.13MPa

(absolute pressure) to 0.30MPa (absolute pressure).

In the method (b3-1) in the method for producing the present foamed molded product, the temperature in the vessel when impregnating the expanded particles with the inorganic gas is preferably 10°C to 90°C, and more preferably 40°C to 90°C.

In the methods (b3-2) and (b3-3), the recovery force of the expanded particles compressed with gas pressure is used in order to fuse the expanded particles in the subsequent step (b5).

Examples

The following description will discuss the present invention in detail through Examples. However, the technical scope of the present invention is not limited to these Examples.

[Materials]

The substances used in Examples and Comparative Examples are described below.

<Polypropylene-based resin (A)>

Polypropylene (A1): ethylene random polypropylene (ethylene/propylene random copolymer); MI of 7.00 g/10 minutes; melting point of 144°C; and ethylene content of 3.2%
Polypropylene (A2): ethylene random polypropylene (ethylene/propylene random copolymer); MI of 5.00 g/10 minutes; melting point of 143°C; and ethylene content of 3.5%
Polypropylene (A3): ethylene random polypropylene (ethylene/propylene random copolymer); MI of 4.00 g/10 minutes; melting point of 143°C; and ethylene content of 3.4%
Polypropylene (A4): ethylene random polypropylene (ethylene/propylene random copolymer); MI of 6.00 g/10 minutes; melting point of 143°C; and ethylene content of 3.4%

<Organic phosphorus-based compound (B)>

Pentaerythrityl diphosphonate: AFLAMMIT (registered trademark) PCO900 manufactured by Thor GmbH

<Hindered amine (C)>

Compound of CAS No. 191680-81-6: FLAMESTAB (registered trademark) NOR116 manufactured by BASF

<Other additives>

(Inorganic nucleating agent)

Talc: Talcan Powder PK-S manufactured by Hayashi-Kasei Co., Ltd.

(Antioxidation agent)

Irgafos168 manufactured by BASF
Irganox1010 manufactured by BASF

(UV-ray inhibitor)

Tinuvin622 manufactured by BASF

<Blowing agent>

Carbon dioxide: Manufactured by Air Water Inc.

<Dispersing agent>

Kaolin: Kaolin ASP-170 manufactured by BASF
Tertiary calcium phosphate: Tertiary calcium phosphate manufactured by Taihei Chemical Industrial Co., Ltd.

<Dispersion auxiliary agent>

Sodium dodecylbenzene sulfonate: DBS G-15 manufactured by Kao Corporation

The dispersing agent and the dispersion auxiliary agent are added to the dispersion slurry or to the pressure-resistant closed vessel in the dispersion step described later. Therefore, the dispersing agent and the dispersion auxiliary agent are not present in the resin particles or the expanded particles or are only remaining in small amounts. Furthermore, carbon dioxide used as a blowing agent is emitted from the resulting expanded particles because the expanded particles have high gas permeability. Water which can function as an expansion component is emitted as steam from the resulting expanded particles or is evaporated during drying of the expanded particles. For these reasons, water, the blowing agent, the dispersing agent, and the dispersion auxiliary agent are not included in the calculation of the composition of the expanded particles.

[Measurement method]

An evaluation method carried out in Examples and Comparative Examples will be described below.

(MI of polypropylene-based resin (A))

MI of the polypropylene-based resin (A) was measured with use of an MI measurement device as specified in JIS K7210: 1999, under the following conditions: orifice diameter φ of 2.0959 mm ±0.005 mm; orifice length of 8.000 mm ±0.025 mm; a load of 2160 g; and temperature of 230±0.2°C.

(Melting point of resin particles)

The melting point of the resin particles was measured using a differential scanning calorimeter (DSC6200 type manufactured by Seiko Instruments Inc.). Specific measurement methods were as described in the following (1) through (3): (1) The temperature of 5 mg to 6 mg of the resin particles was increased from 40.0°C to 220.0°C at a temperature increase rate of 10.0°C/min so that the resin particles was melted; (2) thereafter, the temperature of the melted resin particles was decreased from 220.0°C to 40.0°C at a temperature decrease rate of 10.0°C/min so that the resin particles were crystallized; and (3) then, the temperature of the crystallized resin particles was increased from 40.0°C to 220.0°C at a temperature increase rate of 10°C/min. The temperature at a peak (melting peak) in a DSC curve of the resin particles which DSC curve was obtained in the second temperature increase (i.e., in (3)) was regarded as the melting point of the resin particles. It should be noted that, in a case where a plurality of peaks (melting peaks) were present in a DSC curve of the resin particles obtained during the second temperature increase by the above-described method, the temperature at a peak (melting peak) having the greatest melting heat quantity was regarded as a melting point of the resin particles.

(Measurement of average cell diameter of expanded particles)

The method for measuring the average cell diameter of the expanded particles was carried out as described in the following (1) through (5): (1) An expanded particle was cut at the center thereof with the use of a razor (a high stainless steel double-beveled blade manufactured by FEATHER Safety Razor Co., Ltd.); (2) Then, the resulting cross section of the expanded particle was observed with the use of an optical microscope (VHX-5000 manufactured by Keyence Corporation) at a magnification of 50 times; (3) In the image obtained by the observation, a straight line was drawn through the center or substantially center of the cross section of the expanded particle; (4) (4-1) The number (n) of cells present on the line was measured. (4-2) The length of a line segment cut from the straight line by the intersections of the straight line and the surface of the expanded particle was measured and regarded as a diameter L of the expanded particle; (5) The average cell diameter of expanded particles was calculated by the following formula:

$$\text{Average cell diameter } (\mu m) = L/n.$$

(High temperature-side melting heat quantity of expanded particles)

The high temperature-side melting heat quantity of the expanded particles was measured by the following procedures (1) through (5): (1) Approximately 5 mg of the expanded particles was measured out; (2) The temperature of the expanded particles thus measured out was increased from 10°C to 190°C at a temperature increase rate of 10°C/minute, so that the expanded particles were melted; (3) In a DSC curve of the expanded particles obtained in the process (2), a baseline was created by connecting, using a straight line, a point representing the temperature before the start of the melting and a point representing the temperature after the end of the melting; (4) A straight line which passes through the maximum point between the melting peak on the high-temperature side or the melting peak at the highest temperature and the adjacent melting peak was drawn perpendicularly to the X-axis; and (5) The quantity of heat (J/g) calculated from the high-temperature side region enclosed by the straight line passing through the baseline and the maximum point and the DSC curve was regarded as the high temperature-side melting heat quantity of the expanded particles.

(Density of foamed molded product)

The density of the foamed molded product (foamed molded product density) was measured as described in the following (1) through (3): (1) The length (mm) in the length direction (mm), the width direction (mm), and the thickness direction of the foamed molded product were measured and the volume V (L) of the foamed molded product was calculated; (2) The weight W (g) of the foamed molded product was measured; and (3) The density of the foamed molded product was calculated on the basis of the following formula:

$$\text{Density of foamed molded product (g/L)} = W/V.$$

(Flame retardancy of foamed molded product)

The flame retardancy of the foamed molded product was measured and evaluated by the oxygen index (OI) and the UL94 "vertical burning foamed material test".

(Oxygen index)

The oxygen index of the foamed molded product was measured as described in the following (1) and (2): (1) A sample measuring 150 mm in length, 10 mm in width, and 10 mm in thickness was cut from the foamed molded product; and (2) the oxygen index of the cut-out sample was measured in accordance with JIS K7201 (method for testing the flammability using the oxygen index).

(UL94 "vertical burning foamed material test")

The test method in UL94 "vertical burning foamed material test" included the following steps (1) through (5): (1) A test sample (sample) having specific dimensions (length of 125±5 mm × width of 13±0.5 mm) and a specific thickness (thickness (t) of the test sample = 13 mm, 8 mm, or 5 mm) was cut our from the foamed molded product; (2) The test sample thus cut out was fixed at the upper part thereof with use of a fixing clamp, the test sample was held vertically, and absorbent cotton was provided immediately below the test sample; (2) Flame of a gas burner was brought into contact, for 10 seconds, with the bottom end of the test sample being held, so as to burn the test sample (first burning); (3) The burning time and the red-hot time of the test sample were measured, and if the burning of the test sample stopped within 30 seconds, the flame of the gas burner was brought into contact with the bottom end of the test sample again for 10 seconds to burn the sample (second burning); (4) The burning time and the red-hot time of the test sample were measured again; and (5) The procedures (1) through (4) were repeated five times total using different test samples, and the flame retardancy was evaluated in accordance with the evaluation standard below.

Evaluation criteria

[Unacceptable (no-good)]: During the first burning or the second burning, the samples continued to burn for not less than 30 seconds or some samples burned to the position of the fixing clamp.

[V-2]: No samples continued to burn for not less than 30 seconds after the first contact burning,

the sum of the burning times after 10 times of contact burning of five samples was not more than 250 seconds,
no samples burned to the position of the fixing clamp,
after the second contact burning, there was no sample for which the sum of the burning time and the red-hot time was not less than 250 seconds, and
there was/were a sample(s) whose particles that fell during the burning caused the absorbent cotton placed below the test sample to combust.

[V-1]: No samples continued to burn for not less than 30 seconds after the first contact burning or the second contact burning,

the sum of the burning times after the total of 10 times of contact burning of five samples was not more than 250 seconds,
no samples burned to the position of the fixing clamp,
after the second contact burning, there was no sample for which the sum of the burning time and the red-hot time was not less than 250 seconds, and
there was no sample whose particles that fell during any burning caused the absorbent cotton placed below the test sample to combust.

[V-0]: No samples continued to burn for not less than 10 seconds after the first contact burning or the second contact burning,

the sum of the burning times after the total of 10 times of contact burning of five samples was not more than 50 seconds,
no samples burned to the position of the fixing clamp,
after the second contact burning, there was no sample for which the sum of the burning time and the red-hot time was not less than 30 seconds, and
there was no sample whose particles that fell during any burning caused the absorbent cotton placed below the test sample to combust.

[Example 1]

(Preparation of polypropylene-based resin particles)

The components were dry-blended such that, in 100% by weight of the blended product, the polypropylene-based resin (A2) accounted for 83.6% by weight, the organic phosphorus-based compound (B) accounted for 11.0% by weight, the hindered amine (C) accounted for 5.0% by weight, and Talcan Powder PK-S, which is an inorganic nucleating agent, Irgafos168 and Irganox1010, which are antioxidation agents, and Tinuvin622, which is an UV-ray inhibitor, accounted for 0.4% by weight together as other additives.

The blended product thus obtained was introduced into a twin-screw extruder "TEM26SX manufactured by Shibaura Machine Co., Ltd.", and the resultant product was melted and kneaded at a resin temperature of 250°C. The melted and kneaded polypropylene-based resin composition was extruded in strands through a die attached to the tip of the extruder and having a circular hole. The extruded polypropylene-based resin composition was cooled with water, and then cut with a cutter, so that resin particles were obtained (granulation step). The melting point of the resin particles thus obtained were measured. The results are shown in Table 1.

(Preparation of polypropylene-based expanded particles (first-step expanded particles))

100 parts by weight of the resin particles thus obtained, 442 parts by weight of pure water, 1.1 parts by weight of tertiary calcium phosphate as a dispersing agent, 0.22 parts by weight of Kaolin ASP-170, and 0.027 parts by weight of DBS as a dispersion auxiliary agent were introduced into a pressure-resistant closed vessel. Thereafter, 2.1 parts by weight of carbon dioxide as a blowing agent was introduced into the pressure-resistant closed vessel while the raw material in the pressure-resistant closed vessel was being stirred, so that a dispersion slurry was prepared (dispersion step). Next, the temperature inside the pressure-resistant closed vessel was then heated to an expansion temperature of 150.0°C. Subsequently, carbon dioxide was additionally impregnated into the pressure-resistant closed vessel, and the pressure in the pressure-resistant closed vessel was raised to an expansion pressure of 1.1 MPa (gage pressure) (temperature-increasing and pressure-increasing step). Next, the inside of the pressure-resistant closed vessel was maintained at the expansion temperature and expansion pressure for 20 minutes (maintaining step), and then the valve installed in the lower part of the closed vessel was opened. The dispersion slurry was released through an orifice having an

opening diameter of 3.6 mm into an expansion cylinder under atmospheric pressure, so that expanded particles (first-step expanded particles) were obtained (releasing step). At this time, carbon dioxide was additionally impregnated into the pressure-resistant closed vessel so that the pressure inside the pressure-resistant closed vessel was not reduced from the expansion pressure during the releasing of the dispersion slurry, and the internal pressure of the pressure-resistant closed vessel was maintained at 1.1 MPa (gage pressure). The average cell diameter and the high temperature-side melting heat quantity of the expanded particles thus obtained were measured. The results are shown in Table 1. The expanded particles thus obtained contained the organic phosphorus-based compound (B) in an amount of 11.0% by weight and the hindered amine (C) in an amount of 5.0% by weight, with respect to 100% by weight as a total amount of the expanded particles.

(Preparation of polypropylene-based foamed molded product)

The expanded particles (first-step expanded particles) obtained were introduced into a pressure-resistant closed vessel. Air was introduced into the pressure-resistant closed vessel, and the expanded particles in the pressure-resistant closed vessel were impregnated with pressurized air, so that an internal-expanded particle pressure (absolute pressure) of 0.25MPa (absolute pressure) was imparted to the expanded particles. The expanded particles impregnated with air was heat-molded using a molding machine (polypropylene in-mold foam molding machine manufactured by DAISEN Co., Ltd.) with steam at 0.32 MPa (gage pressure), so that a foamed molded product was obtained. The foamed molded product obtained was left at room temperature for 1 hour, then cured and dried at 75°C for 12 hours in a thermostatic chamber, and then left to stand at room temperature for 4 hours again. Thereafter, the density and the flame retardancy of the foamed molded product obtained were measured and evaluated by the above-described method. The results are shown in Table 1.

[Example 2]

Resin particles, expanded particles, and foamed molded products were obtained as in Example 1 except that (i) the components were dry-blended such that the polypropylene-based resin (A1) accounted for 81.6% by weight, the organic phosphorus-based compound (B) accounted for 13.0% by weight, and the hindered amine (C) accounted for 5.0% by weight with respect to 100% by weight of the blended product and (ii) the expansion temperature was set to 150.9°C and the expansion pressure was set to 1.0 MPa (gage pressure). Then, the physical properties were measured and evaluated. The results are shown in Table 1. The expanded particles thus obtained contained the organic phosphorus-based compound (B) in an amount of 13.0% by weight and the hindered amine (C) in an amount of 5.0% by weight, with respect to 100% by weight as a total amount of the expanded particles.

[Example 3]

Resin particles, expanded particles, and foamed molded products were obtained as in Example 1 except that (i) the components were dry-blended such that the polypropylene-based resin (A3) accounted for 76.6% by weight, the organic phosphorus-based compound (B) accounted for 15.0% by weight, and the hindered amine (C) accounted for 8.0% by weight with respect to 100% by weight of the blended product and (ii) the expansion temperature was set to 150.3°C and the expansion pressure was set to 1.0 MPa (gage pressure). Then, the physical properties were measured and evaluated. The results are shown in Table 1. The expanded particles thus obtained contained the organic phosphorus-based compound (B) in an amount of 15.0% by weight and the hindered amine (C) in an amount of 8.0% by weight, with respect to 100% by weight as a total amount of the expanded particles.

[Example 4]

Resin particles, expanded particles, and foamed molded products were obtained as in Example 1 except that (i) the components were dry-blended such that the polypropylene-based resin (A3) accounted for 74.6% by weight, the organic phosphorus-based compound (B) accounted for 20.0% by weight, and the hindered amine (C) accounted for 5.0% by weight with respect to 100% by weight of the blended product and (ii) the expansion temperature was set to 150.5°C and the expansion pressure was set to 1.2 MPa (gage pressure). Then, the physical properties were measured and evaluated. The results are shown in Table 1. The expanded particles thus obtained contained the organic phosphorus-based compound (B) in an amount of 20.0% by weight and the hindered amine (C) in an amount of 5.0% by weight, with respect to 100% by weight as a total amount of the expanded particles.

[Example 5]

Resin particles, expanded particles, and foamed molded products were obtained as in Example 1 except that (i) the components were dry-blended such that the polypropylene-based resin (A2) accounted for 81.6% by weight, the

organic phosphorus-based compound (B) accounted for 13.0% by weight, and the hindered amine (C) accounted for 5.0% by weight with respect to 100% by weight of the blended product and (ii) the expansion temperature was set to 150.2°C and the expansion pressure was set to 1.5 MPa (gage pressure). Then, the physical properties were measured and evaluated. The results are shown in Table 1. The expanded particles thus obtained contained the organic phosphorus-based compound (B) in an amount of 13.0% by weight and the hindered amine (C) in an amount of 5.0% by weight, with respect to 100% by weight as a total amount of the expanded particles.

[Example 6]

Resin particles, expanded particles, and foamed molded products were obtained as in Example 1 except that (i) the components were dry-blended such that the polypropylene-based resin (A1) accounted for 79.6% by weight, the organic phosphorus-based compound (B) accounted for 15.0% by weight, and the hindered amine (C) accounted for 5.0% by weight with respect to 100% by weight of the blended product and (ii) the expansion temperature was set to 151.8°C and the expansion pressure was set to 0.8 MPa (gage pressure). Then, the physical properties were measured and evaluated. The results are shown in Table 1. The expanded particles thus obtained contained the organic phosphorus-based compound (B) in an amount of 15.0% by weight and the hindered amine (C) in an amount of 5.0% by weight, with respect to 100% by weight as a total amount of the expanded particles.

[Example 7]

Resin particles, expanded particles, and foamed molded products were obtained as in Example 1 except that (i) the components were dry-blended such that the polypropylene-based resin (A1) accounted for 79.6% by weight, the organic phosphorus-based compound (B) accounted for 15.0% by weight, and the hindered amine (C) accounted for 5.0% by weight with respect to 100% by weight of the blended product and (ii) the expansion temperature was set to 151.9°C and the expansion pressure was set to 0.7 MPa (gage pressure). Then, the physical properties were measured and evaluated. The results are shown in Table 1. The expanded particles thus obtained contained the organic phosphorus-based compound (B) in an amount of 15.0% by weight and the hindered amine (C) in an amount of 5.0% by weight, with respect to 100% by weight as a total amount of the expanded particles.

[Example 8]

Resin particles, expanded particles, and foamed molded products were obtained as in Example 1 except that (i) the components were dry-blended such that the polypropylene-based resin (A1) accounted for 79.6% by weight, the organic phosphorus-based compound (B) accounted for 15.0% by weight, and the hindered amine (C) accounted for 5.0% by weight with respect to 100% by weight of the blended product and (ii) the expansion temperature was set to 151.6°C and the expansion pressure was set to 1.0 MPa (gage pressure). Then, the physical properties were measured and evaluated. The results are shown in Table 1. The expanded particles thus obtained contained the organic phosphorus-based compound (B) in an amount of 15.0% by weight and the hindered amine (C) in an amount of 5.0% by weight, with respect to 100% by weight as a total amount of the expanded particles.

[Example 9]

Resin particles, expanded particles, and foamed molded products were obtained as in Example 1 except that (i) the components were dry-blended such that the polypropylene-based resin (A1) accounted for 79.6% by weight, the organic phosphorus-based compound (B) accounted for 15.0% by weight, and the hindered amine (C) accounted for 5.0% by weight with respect to 100% by weight of the blended product and (ii) the expansion temperature was set to 151.9°C and the expansion pressure was set to 1.1 MPa (gage pressure). Then, the physical properties were measured and evaluated. The results are shown in Table 1. The expanded particles thus obtained contained the organic phosphorus-based compound (B) in an amount of 15.0% by weight and the hindered amine (C) in an amount of 5.0% by weight, with respect to 100% by weight as a total amount of the expanded particles.

[Table 1]

(Table 1)

| | | | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|
| Resin particles | Melting point of resin particles | °C | 141.5 | 141.3 | 140.6 | 141.7 | 141.4 | 140.7 | 141.8 | 141.2 | 141.3 |
| Expansion conditions | Blowing agent | - | $CO_2$ | $CO_2$ | $CO_2$ | $CO_2$ | $CO_2$ | $CO_2$ | $CO_2$ | $CO_2$ | $CO_2$ |
| | Expansion temperature | °C | 150.0 | 150.9 | 150.3 | 150.5 | 150.2 | 151.8 | 151.9 | 151.6 | 151.9 |
| | Expansion pressure | MPa | 1.1 | 1.0 | 1.0 | 1.2 | 1.5 | 0.8 | 0.7 | 1.0 | 1.1 |
| Expanded particles | Polypropylene-based resin(A) | % by weight | 83.6 | 81.6 | 75.6 | 74.5 | 81.6 | 79.6 | 79.6 | 79.6 | 796 |
| | Organic phosphorus-based compound(B) | % by weight | 11.0 | 13.0 | 15.0 | 20.0 | 13.0 | 15.0 | 15.0 | 15.0 | 15.0 |
| | Hindered amine(C) | % by weight | 5.0 | 5.0 | 8.0 | 5.0 | 5.0 | 5.0 | 5.0 | 5.0 | 5.0 |
| | Other additives | % by weight | 0.4 | 0.4 | 0.4 | 0.4 | 0.4 | 0.4 | 0.4 | 0.4 | 0.4 |
| | Average cell diameter | μm | 189 | 435 | 256 | 299 | 225 | 370 | 465 | 294 | 444 |
| | High temperature-side melting heat quantity | J/g | 24.6 | 15.1 | 14.8 | 13.4 | 13.2 | 14.2 | 12.8 | 13.5 | 13.5 |
| | Presence/absence of second-step expansion | | - | - | - | - | - | - | - | - | - |
| Foamed molded product | Density of molded product | g/L | 300.0 | 153.0 | 231.0 | 93.0 | 59.2 | 173 | 204 | 88.1 | 88.4 |
| | Oxygen index(OI) | % | 28.2 | 27.9 | 27.2 | 28.1 | 27.4 | 28 | 28.4 | 27.4 | 27.5 |
| | UL94 determination | t=13 mm | V-0 | V-0 | V-0 | V-0 | V-2 | V-0 | V-0 | V-0 | V-0 |
| | | t=8 mm | V-0 | V-0 | V-0 | V-0 | NG | V-0 | V-0 | *V-2* | V-0 |
| | | t=5 mm | V-0 | V-0 | V-0 | V-0 | NG | V-0 | V-0 | NG | NG |
| * "Ex." indicates "Examples". | | | | | | | | | | | |

[Example 10]

(Polypropylene-based resin particles and preparation of polypropylene-based expanded particles)

Resin particles and expanded particles (first-step expanded particles) were obtained as in Example 1 except that (i) the components were dry-blended such that the polypropylene-based resin (A1) accounted for 79.6% by weight, the organic phosphorus-based compound (B) accounted for 15.0% by weight, and the hindered amine (C) accounted for 5.0% by weight with respect to 100% by weight of the blended product and (ii) the expansion temperature was set to 150.3°C and the expansion pressure was set to 1.2 MPa (gage pressure). Then, the physical properties were measured and evaluated. The results are shown in Table 1. The expanded particles thus obtained contained the organic phosphorus-based compound (B) in an amount of 15.0% by weight and the hindered amine (C) in an amount of 5.0% by weight, with respect to 100% by weight as a total amount of the expanded particles.

(Preparation of polypropylene-based expanded particles (second-step expanded particles))

The first-step expanded particles obtained were dried at 60°C for 6 hours and then introduced into a pressure-resistant closed vessel. Air was introduced into the pressure-resistant closed vessel, and the first-step expanded particles in the pressure-resistant closed vessel were impregnated with pressurized air, so that an internal-expanded particle pressure (absolute pressure) of 0.30 MPa (absolute pressure) was imparted to the first-step expanded particles. Approximately 20 L of the first-step expanded particles which have been impregnated with the air (i.e., to which the internal-expanded particle pressure has been imparted) were introduced into the expansion machine. Thereafter, the first-step expanded particles in the expansion machine were heated with steam at 0.10 MPa (gage pressure) for 30 seconds to further expand the first-step expanded particles (second-stage expansion), so that expanded particles (second-step expanded particles) were obtained.

(Preparation of polypropylene-based foamed molded product)

Foamed molded products were obtained as in Example 1, except that the expanded particles (second-step expanded particles) obtained were introduced into a pressure-resistant closed vessel. Then, physical properties were measured and evaluated. The results are shown in Table 1.

[Example 11]

Resin particles, expanded particles, and foamed molded products were obtained as in Example 10 except that (i) the components were dry-blended such that the polypropylene-based resin (A3) accounted for 74.6% by weight, the organic phosphorus-based compound (B) accounted for 20.0% by weight, and the hindered amine (C) accounted for 5.0% by weight with respect to 100% by weight of the blended product and (ii) the expansion temperature was set to 150.5°C and the expansion pressure was set to 1.2 MPa (gage pressure). Then, the physical properties were measured and evaluated. The results are shown in Table 2. The expanded particles thus obtained contained the organic phosphorus-based compound (B) in an amount of 20.0% by weight and the hindered amine (C) in an amount of 5.0% by weight, with respect to 100% by weight as a total amount of the expanded particles.

[Example 12]

Resin particles, expanded particles, and foamed molded products were obtained as in Example 1 except that (i) the components were dry-blended such that the polypropylene-based resin (A3) accounted for 74.6% by weight, the organic phosphorus-based compound (B) accounted for 20.0% by weight, and the hindered amine (C) accounted for 5.0% by weight with respect to 100% by weight of the blended product and (ii) the expansion temperature was set to 150.5°C and the expansion pressure was set to 1.2 MPa (gage pressure). Then, the physical properties were measured and evaluated. The results are shown in Table 2. The expanded particles thus obtained contained the organic phosphorus-based compound (B) in an amount of 20.0% by weight and the hindered amine (C) in an amount of 5.0% by weight, with respect to 100% by weight as a total amount of the expanded particles.

[Example 13]

Resin particles, expanded particles, and foamed molded products were obtained as in Example 1 except that (i) the components were dry-blended such that the polypropylene-based resin (A2) accounted for 81.6% by weight, the organic phosphorus-based compound (B) accounted for 13.0% by weight, and the hindered amine (C) accounted for 5.0% by weight with respect to 100% by weight of the blended product and (ii) the expansion temperature was set to 148.5°C and the expansion pressure was set to 2.3 MPa (gage pressure). Then, the physical properties were measured and evaluated. The results are shown in Table 2. The expanded particles thus obtained contained the organic phosphorus-based compound (B) in an amount of 13.0% by weight and the hindered amine (C) in an amount of 5.0% by weight, with respect to 100% by weight as a total amount of the expanded particles.

[Example 14]

Resin particles, expanded particles, and foamed molded products were obtained as in Example 1 except that (i) the components were dry-blended such that the polypropylene-based resin (A2) accounted for 81.6% by weight, the organic phosphorus-based compound (B) accounted for 13.0% by weight, and the hindered amine (C) accounted for 5.0% by weight with respect to 100% by weight of the blended product and (ii) the expansion temperature was set to 148.5°C and the expansion pressure was set to 2.3 MPa (gage pressure). Then, the physical properties were measured and evaluated.

The results are shown in Table 2. The expanded particles thus obtained contained the organic phosphorus-based compound (B) in an amount of 13.0% by weight and the hindered amine (C) in an amount of 5.0% by weight, with respect to 100% by weight as a total amount of the expanded particles.

[Example 15]

Resin particles, expanded particles, and foamed molded products were obtained as in Example 1 except that (i) the components were dry-blended such that the polypropylene-based resin (A1) accounted for 79.6% by weight, the organic phosphorus-based compound (B) accounted for 15.0% by weight, and the hindered amine (C) accounted for 5.0% by weight with respect to 100% by weight of the blended product and (ii) the expansion temperature was set to 150.3°C and the expansion pressure was set to 2.3 MPa (gage pressure). Then, the physical properties were measured and evaluated. The results are shown in Table 2. The expanded particles thus obtained contained the organic phosphorus-based compound (B) in an amount of 15.0% by weight and the hindered amine (C) in an amount of 5.0% by weight, with respect to 100% by weight as a total amount of the expanded particles.

[Example 16]

Resin particles, expanded particles, and foamed molded products were obtained as in Example 1 except that (i) the components were dry-blended such that the polypropylene-based resin (A1) accounted for 79.6% by weight, the organic phosphorus-based compound (B) accounted for 15.0% by weight, and the hindered amine (C) accounted for 5.0% by weight with respect to 100% by weight of the blended product and (ii) the expansion temperature was set to 150.3°C and the expansion pressure was set to 2.3 MPa (gage pressure). Then, the physical properties were measured and evaluated. The results are shown in Table 2. The expanded particles thus obtained contained the organic phosphorus-based compound (B) in an amount of 15.0% by weight and the hindered amine (C) in an amount of 5.0% by weight, with respect to 100% by weight as a total amount of the expanded particles.

[Example 17]

Resin particles, expanded particles, and foamed molded products were obtained as in Example 1 except that (i) the components were dry-blended such that the polypropylene-based resin (A1) accounted for 79.6% by weight, the organic phosphorus-based compound (B) accounted for 15.0% by weight, and the hindered amine (C) accounted for 5.0% by weight with respect to 100% by weight of the blended product and (ii) the expansion temperature was set to 150.3°C and the expansion pressure was set to 2.3 MPa (gage pressure). Then, the physical properties were measured and evaluated. The results are shown in Table 2. The expanded particles thus obtained contained the organic phosphorus-based compound (B) in an amount of 15.0% by weight and the hindered amine (C) in an amount of 5.0% by weight, with respect to 100% by weight as a total amount of the expanded particles.

[Example 18]

Resin particles, expanded particles, and foamed molded products were obtained as in Example 1 except that (i) the components were dry-blended such that the polypropylene-based resin (A2) accounted for 83.6% by weight, the organic phosphorus-based compound (B) accounted for 13.0% by weight, and the hindered amine (C) accounted for 3.0% by weight with respect to 100% by weight of the blended product and (ii) the expansion temperature was set to 150.2°C and the expansion pressure was set to 1.3 MPa (gage pressure). Then, the physical properties were measured and evaluated. The results are shown in Table 2. The expanded particles thus obtained contained the organic phosphorus-based compound (B) in an amount of 13.0% by weight and the hindered amine (C) in an amount of 3.0% by weight, with respect to 100% by weight as a total amount of the expanded particles.

[Example 19]

Resin particles, expanded particles, and foamed molded products were obtained as in Example 1 except that (i) the components were dry-blended such that the polypropylene-based resin (A2) accounted for 81.6% by weight, the organic phosphorus-based compound (B) accounted for 13.0% by weight, and the hindered amine (C) accounted for 5.0% by weight with respect to 100% by weight of the blended product and (ii) the expansion temperature was set to 150.2°C and the expansion pressure was set to 1.5 MPa (gage pressure). Then, the physical properties were measured and evaluated. The results are shown in Table 2. The expanded particles thus obtained contained the organic phosphorus-based compound (B) in an amount of 13.0% by weight and the hindered amine (C) in an amount of 5.0% by weight, with respect to 100% by weight as a total amount of the expanded particles.

[Table 2]

(Table 2)

| | | | Ex. 10 | Ex. 11 | Ex. 12 | Ex. 13 | Ex. 14 | Ex. 15 | Ex. 16 | Ex. 17 | Ex. 18 | Ex. 19 |
|---|---|---|---|---|---|---|---|---|---|---|---|---|
| Resin particles | Melting point of resin particles | °C | 141.0 | 141.7 | 141. 7 | 141.4 | 141.4 | 141.0 | 141.0 | 141.0 | 141.2 | 141.4 |
| Expansion conditions | Blowing agent | - | $CO_2$ | $CO_2$ | $CO_2$ | $CO_2$ | $CO_2$ | $CO_2$ | $CO_2$ | $CO_2$ | $CO_2$ | $CO_2$ |
| | Expansion temperature | °C | 151.1 | 150.5 | 150.5 | 148.5 | 148.5 | 150.3 | 150.3 | 150.3 | 150.2 | 150.2 |
| | Expansion pressure | MPa | 1.0 | 1.2 | 1.2 | 2.3 | 2.3 | 2.3 | 2.3 | 2.3 | 1.3 | 1.5 |
| Expanded particles | Polypropylene-based resin(A) | % by weight | 79.6 | 74.6 | 74.6 | 81.6 | 81.6 | 79.6 | 79.6 | 79.6 | 83.6 | 81.6 |
| | Organic phosohorus-based compound(B) | % by weight | 15.0 | 20.0 | 20.0 | 13.0 | 13.0 | 15.0 | 15.0 | 15.0 | 13.0 | 13.0 |
| | Hindered amine(C) | % by weight | 5.0 | 5.0 | 5.0 | 5.0 | 5.0 | 5.0 | 5.0 | 5.0 | 3.0 | 5.0 |
| | Other additives | % by weight | 0.4 | 0.4 | 0.4 | 0.4 | 0.4 | 0.4 | 0.4 | 0.4 | 0.4 | 0.4 |
| | Average cell diameter | μm | 328 | 289 | 299 | 169 | 169 | 211 | 211 | 211 | 282 | 225 |
| | High temperature-side melting heat quantity | J/g | 15.0 | 13.4 | 13.4 | 14.3 | 14.3 | 12.1 | 12.1 | 12.1 | 15.1 | 13.1 |
| | Presence/absence of second-step expansion | | Yes | Yes | - | - | - | - | - | Yes | - | - |
| Foamed molded product | Density of molded product | g/L | 83.8 | 76.3 | 92.0 | 36.3 | 42.3 | 31.1 | 35.5 | 22.3 | 133.0 | 80.0 |
| | Oxygen index(OI) | % | 27.9 | 28.2 | 28.1 | 28.0 | 27.8 | 28.3 | 29.0 | 29.5 | 27.3 | 27.4 |
| | UL94 determination | t=13 mm | V-2 | V-2 | V-0 | NG | NG | NG | NG | NG | V-2 | V-2 |
| | | t=8 mm | NG | V-2 | V-0 | NG | NG | NG | NG | NG | V-2 | NG |
| | | t=5 mm | NG | NG | NG | NG | NG | NG | NG | NG | NG | NG |

* "Ex." indicates "Examples".

[Comparative Example 1]

Resin particles, expanded particles, and foamed molded products were obtained as in Example 1 except that (i) the components were dry-blended such that the polypropylene-based resin (A1) accounted for 95.6% by weight, the organic phosphorus-based compound (B) accounted for 2.7% by weight, and the hindered amine (C) accounted for 1.3% by weight with respect to 100% by weight of the blended product and (ii) the expansion temperature was set to 150.7°C and the expansion pressure was set to 1.7 MPa (gage pressure). Then, the physical properties were measured and evaluated. The results are shown in Table 3. The expanded particles thus obtained contained the organic phosphorus-based compound (B) in an amount of 2.7% by weight and the hindered amine (C) in an amount of 1.3% by weight, with respect to 100% by weight as a total amount of the expanded particles.

[Comparative Example 2]

Resin particles, expanded particles, and foamed molded products were obtained as in Example 1 except that (i) the components were dry-blended such that the polypropylene-based resin (A1) accounted for 96.6% by weight, the organic phosphorus-based compound (B) accounted for 2.7% by weight, and the hindered amine (C) accounted for 0.3% by weight with respect to 100% by weight of the blended product and (ii) the expansion temperature was set to 150.7°C and the expansion pressure was set to 1.7 MPa (gage pressure). Then, the physical properties were measured and evaluated. The results are shown in Table 3. The expanded particles thus obtained contained the organic phosphorus-based compound (B) in an amount of 2.7% by weight and the hindered amine (C) in an amount of 0.3% by weight, with respect to 100% by weight as a total amount of the expanded particles.

[Comparative Example 3]

Resin particles, expanded particles, and foamed molded products were obtained as in Example 1 except that (i) the components were dry-blended such that the polypropylene-based resin (A2) accounted for 79.6% by weight and the organic phosphorus-based compound (B) accounted for 20.0% by weight with respect to 100% by weight of the blended product, (ii) the hindered amine (C) was not used, (iii) the other additives were used in a total amount of 050 parts by weight, and (iv) the expansion temperature was set to 150.2°C and the expansion pressure was set to 1.3 MPa (gage pressure). Then, the physical properties were measured and evaluated. The results are shown in Table 3. The expanded particles thus obtained contained the organic phosphorus-based compound (B) in an amount of 20.0% by weight, with respect to 100% by weight as a total amount of the expanded particles.

[Comparative Example 4]

Resin particles, expanded particles, and foamed molded products were obtained as in Example 1 except that (i) the components were dry-blended such that the polypropylene-based resin (A1) accounted for 95.9% by weight, the organic phosphorus-based compound (B) accounted for 2.7% by weight, and the hindered amine (C) accounted for 1.0% by weight with respect to 100% by weight of the blended product and (ii) the expansion temperature was set to 150.3°C and the expansion pressure was set to 2.3 MPa (gage pressure). Then, the physical properties were measured and evaluated. The results are shown in Table 3. The expanded particles thus obtained contained the organic phosphorus-based compound (B) in an amount of 2.7% by weight and the hindered amine (C) in an amount of 1.0% by weight, with respect to 100% by weight as a total amount of the expanded particles.

[Comparative Example 5]

Resin particles, expanded particles, and foamed molded products were obtained as in Example 1 except that (i) the components were dry-blended such that the polypropylene-based resin (A1) accounted for 95.6% by weight, the organic phosphorus-based compound (B) accounted for 2.7% by weight, and the hindered amine (C) accounted for 1.3% by weight with respect to 100% by weight of the blended product and (ii) the expansion temperature was set to 150.5°C and the expansion pressure was set to 2.0 MPa (gage pressure). Then, the physical properties were measured and evaluated. The results are shown in Table 3. The expanded particles thus obtained contained the organic phosphorus-based compound (B) in an amount of 2.7% by weight and the hindered amine (C) in an amount of 1.3% by weight, with respect to 100% by weight as a total amount of the expanded particles.

[Comparative Example 6]

Resin particles, expanded particles, and foamed molded products were obtained as in Example 1 except that (i)

the components were dry-blended such that the polypropylene-based resin (A1) accounted for 93.6% by weight, the organic phosphorus-based compound (B) accounted for 4.5% by weight, and the hindered amine (C) accounted for 1.5% by weight with respect to 100% by weight of the blended product and (ii) the expansion temperature was set to 150.7°C and the expansion pressure was set to 1.7 MPa (gage pressure). Then, the physical properties were measured and evaluated. The results are shown in Table 3. The expanded particles thus obtained contained the organic phosphorus-based compound (B) in an amount of 4.5% by weight and the hindered amine (C) in an amount of 1.5% by weight, with respect to 100% by weight as a total amount of the expanded particles.

[Comparative Example 7]

Resin particles, expanded particles, and foamed molded products were obtained as in Example 1 except that (i) the components were dry-blended such that the polypropylene-based resin (A4) accounted for 85.6% by weight, the organic phosphorus-based compound (B) accounted for 9.0% by weight, and the hindered amine (C) accounted for 5.0% by weight with respect to 100% by weight of the blended product and (ii) the expansion temperature was set to 150.5°C and the expansion pressure was set to 1.4 MPa (gage pressure). Then, the physical properties were measured and evaluated. The results are shown in Table 3. The expanded particles thus obtained contained the organic phosphorus-based compound (B) in an amount of 9.0% by weight and the hindered amine (C) in an amount of 5.0% by weight, with respect to 100% by weight as a total amount of the expanded particles.

It should be noted that in all of Examples 1 through 19 and Comparative Examples 1 through 7, there were two melting peaks in the DSC curve obtained by differential scanning calorimetry (DSC method). In all of Examples 1 through 19 and Comparative Examples 1 through 7, the particle weight of the polypropylene-based expanded particles obtained was 1.2 mg.

[Table 3]

(Table 3)

| | | | C.Ex 1 | C.Ex. 2 | C.Ex. 3 | C.Ex. 4 | C.Ex. 5 | C.Ex. 6 | C.Ex. 7 |
|---|---|---|---|---|---|---|---|---|---|
| Resin particles | Melting point of resin particles | °C | 143.9 | 144.2 | 142.3 | 144.2 | 143.9 | 144.0 | 142.8 |
| Expansion conditions | Blowing agent | - | $CO_2$ | $CO_2$ | $CO_2$ | $CO_2$ | $CO_2$ | $CO_2$ | $CO_2$ |
| | Expansion temperature | °C | 150.7 | 150.7 | 150.2 | 150.3 | 150.5 | 150.7 | 150.5 |
| | Expansion pressure | MPa | 1.7 | 1.7 | 1.3 | 2.3 | 2.0 | 1.7 | 1.4 |
| Expanded particles | Polypropylene-based resin(A) | % by weight | 95.6 | 96.6 | 79.6 | 95.9 | 95.6 | 93.6 | 85.6 |
| | Organic phosphorus-based compound(B) | % by weight | 2.7 | 2.7 | 20.0 | 2.7 | 2.7 | 4.5 | 9.0 |
| | Hindered amine(C) | % by weight | 1.3 | 0.3 | 0 | 1.0 | 1.3 | 1.5 | 5.0 |
| | Other additives | % by weight | 0.4 | 0.4 | 0.4 | 0.4 | 0.4 | 0.4 | 0.4 |
| | Average cell diameter | μm | 169 | 238 | 220 | 222 | 222 | 225 | 339 |
| | High temperature-side melting heat quantity | J/g | 18.3 | 16.5 | 10.5 | 17.0 | 17.5 | 16.5 | 15.1 |
| | Presence/absence of second-step expansion | | - | - | - | - | - | - | - |

(continued)

| | | | C.Ex 1 | C.Ex. 2 | C.Ex. 3 | C.Ex. 4 | C.Ex. 5 | C.Ex. 6 | C.Ex. 7 |
|---|---|---|---|---|---|---|---|---|---|
| Foamed molded product | Density of molded product | g/L | 142.0 | 172.0 | 150.0 | 55.1 | 73.3 | 71.5 | 91.4 |
| | Oxygen irdex(OI) | % | 25.C | 22.1 | 25.5 | 24.3 | 25.0 | 25.7 | 25.8 |
| | UL94 determination | t=13 mm | V-2 | NG | V-2 | NG | NG | NG | V-2 |
| | | t=8 mm | V-2 | NG | V-2 | NG | NG | NG | V-2 |
| | | t=5 mm | V-2 | NG | V-2 | NG | NG | NG | NG |
| * "C.Ex." indicates "Comparative Example". | | | | | | | | | |

Aspects of the present invention can also be expressed as follows:
The following can be clearly seen from Tables 1 through 3:
The foamed molded products obtained by molding the expanded particles of Examples 1 through 19 each have an oxygen index of not less than 26.0%. The foamed molded products of Examples 1 through 4, 6, and 7 satisfy the standard V-0 when the thickness of the sample was any of 5 mm, 8 mm, and 13 mm. In contrast, the foamed molded products obtained by molding the expanded particles of Comparative Examples 1 through 7 each had an oxygen index of less than 26.0%, and none of these foamed molded products satisfied the standard V-0 when the thickness of the sample was any of 5 mm, 8 mm, and 13 mm. Thus, it was demonstrated that the features in an embodiment of the present invention make it possible to obtain a foamed molded product which satisfies the standard V-0 when the oxygen index is not less than 26.0% and/or the thickness of the sample is any of 5 mm, 8 mm, and 13 mm. That is, it was demonstrated that the features in an embodiment of the present invention make it possible to provide a foamed molded product that is excellent in flame retardancy.

Industrial Applicability

Performing in-mold foam molding of the polypropylene-based expanded particles in accordance with an embodiment of the present invention makes it possible to provide a polypropylene-based foamed molded product that is excellent in flame retardancy. The polypropylene-based foamed molded product that is excellent in flame retardancy can be put to various applications such as shock-absorbing packing materials, shipping materials, thermal insulating materials, civil engineering and construction materials, and automotive components, and, in particular, can be suitably used in various fields, such as those of transportation, buildings, structures, furniture, electric devices, and electronic devices, in which satisfying the strict flame retardancy standards is required.

## Claims

1. Polypropylene-based expanded particles comprising: a polypropylene-based resin (A), an organic phosphorus-based compound (B), and a hindered amine (C), wherein

    the polypropylene-based expanded particles contain
    the organic phosphorus-based compound (B) in an amount of more than 10.0% by weight and not more than 20.0% by weight and
    the hindered amine (C) in an amount of 1.0% by weight to 10.0% by weight with respect to 100% by weight as a total amount of the polypropylene-based expanded particles.

2. The polypropylene-based expanded particles according to claim 1, wherein the organic phosphorus-based compound (B) is cyclic phosphonate.

3. The polypropylene-based expanded particles according to claim 2, wherein the cyclic phosphonate is cyclic bisphosphonate.

4. The polypropylene-based expanded particles according to claim 3, wherein the cyclic bisphosphonate is pentaerythrityl diphosphonate.

5. The polypropylene-based expanded particles according to any one of claims 1 through 4, wherein a weight ratio (ratio: (B)/(C)) of the organic phosphorus-based compound (B) to the hindered amine (C) is 1.0 to 20.0.

6. The polypropylene-based expanded particles according to any one of claims 1 through 5, wherein a weight ratio of the polypropylene-based resin (A) to a sum of the organic phosphorus-based compound (B) and the hindered amine (C) (ratio: (A)/{(B)+(C)}) is 1 to 10.

7. The polypropylene-based expanded particles according to any one of claims 1 through 6, wherein the polypropylene-based expanded particles have two melting peaks and a high temperature-side melting heat quantity of 5.0 J/g to 25.0 J/g as measured by differential scanning calorimetry.

8. The polypropylene-based expanded particles according to any one of claims 1 through 7, wherein a melt index (MI) of the polypropylene-based resin (A) is 3.00 g/10 minutes to 30.00 g/10 minutes, measured according to the method in the description.

9. The polypropylene-based expanded particles according to any one of claims 1 through 8, wherein the polypropylene-based resin (A) is a random copolymer of propylene and a monomer other than propylene.

10. The polypropylene-based expanded particles according to any one of claims 1 through 9, wherein the polypropylene-based expanded particles have an average cell diameter of 180 μm to 450 μm and a particle weight of 0.5 mg to 10.0 mg, the average cell diameter being measured according to the method in the description.

11. A polypropylene-based foamed molded product obtained by molding the polypropylene-based expanded particles according to any one of claims 1 through 10.

12. The polypropylene-based foamed molded product according to claim 11, wherein the foamed molded product has an oxygen index of not less than 26.0% as measured in accordance with JIS K7201.

13. The polypropylene-based foamed molded product according to claim 11 or 12, wherein the polypropylene-based foamed molded product has a density of 15.0 g/L to 92.0 g/L, measured according to the method in the description.

14. The polypropylene-based foamed molded product according to claim 11 or 12, wherein the polypropylene-based foamed molded product has a density of more than 92.0 g/L and not more than 400.0 g/L, measured according to the method in the description.

15. A method for producing polypropylene-based expanded particles, comprising:

a dispersion step of dispersing polypropylene-based resin particles, an aqueous dispersion medium, and a blowing agent in a vessel; and
a releasing step of releasing, into a region having a pressure lower than an internal pressure of the vessel, a dispersion slurry obtained in the dispersion step, wherein
the polypropylene-based resin particles contain an organic phosphorus-based compound (B) in an amount of more than 10.0% by weight and not more than 20.0% by weight and a hindered amine (C) in an amount of 1.0% by weight to 10.0% by weight with respect to 100% by weight as a total amount of the polypropylene-based resin particles.

16. The method according to claim 15, wherein the dispersion slurry contains tertiary calcium phosphate, kaolin, and sodium dodecylbenzene sulfonate.

**Patentansprüche**

1. Expandierte Partikel auf Polypropylenbasis, umfassend:

ein Harz auf Polypropylenbasis (A), eine organische Verbindung auf Phosphorbasis (B) und ein gehindertes Amin (C), wobei
die expandierten Partikel auf Polypropylenbasis
die organische Verbindung auf Phosphorbasis (B) in einer Menge von mehr als 10,0 Gew.-% und nicht mehr als

20,0 Gew.-%, und
das gehinderte Amin (C) in einer Menge von 1,0 Gew.-% bis 10,0 Gew.-%, bezogen auf 100 Gew.-% als eine Gesamtmenge der expandierten Partikel auf Polypropylenbasis, enthalten.

**2.** Die expandierten Partikel auf Polypropylenbasis gemäß Anspruch 1, wobei die organische Verbindung auf Phosphorbasis (B) ein cyclisches Phosphonat ist.

**3.** Die expandierten Partikel auf Polypropylenbasis gemäß Anspruch 2, wobei das cyclische Phosphonat ein cyclisches Bisphosphonat ist.

**4.** Die expandierten Partikel auf Polypropylenbasis gemäß Anspruch 3, wobei das cyclische Bisphosphonat Pentaerythrityldiphosphonat ist.

**5.** Die expandierten Partikel auf Polypropylenbasis gemäß einem der Ansprüche 1 bis 4, wobei ein Gewichtsverhältnis (Verhältnis: (B)/(C)) der organischen Verbindung auf Phosphorbasis (B) zu dem gehinderten Amin (C) 1,0 bis 20,0 beträgt.

**6.** Die expandierten Partikel auf Polypropylenbasis gemäß einem der Ansprüche 1 bis 5, wobei ein Gewichtsverhältnis des Harzes auf Polypropylenbasis (A) zu einer Summe der organischen Verbindung auf Phosphorbasis (B) und des gehinderten Amins (C) (Verhältnis: (A)/{(B)+(C)}) 1 bis 10 beträgt.

**7.** Die expandierten Partikel auf Polypropylenbasis gemäß einem der Ansprüche 1 bis 6, wobei die expandierten Partikel auf Polypropylenbasis zwei Schmelzpeaks und eine Hochtemperatur-Schmelzwärmemenge von 5,0 J/g bis 25,0 J/g aufweisen, wie mittels Differential-Scanning-Kalorimetrie gemessen.

**8.** Die expandierten Partikel auf Polypropylenbasis gemäß einem der Ansprüche 1 bis 7, wobei ein Schmelzindex (MI) des Harzes auf Polypropylenbasis (A) 3,00 g/10 Minuten bis 30,00 g/10 Minuten beträgt, gemessen gemäß dem Verfahren in der Beschreibung.

**9.** Die expandierten Partikel auf Polypropylenbasis gemäß einem der Ansprüche 1 bis 8, wobei das Harz auf Polypropylenbasis (A) ein statistisches Copolymer aus Propylen und einem Monomer, verschieden von Propylen, ist.

**10.** Die expandierten Partikel auf Polypropylenbasis gemäß einem der Ansprüche 1 bis 9, wobei die expandierten Partikel auf Polypropylenbasis einen durchschnittlichen Zelldurchmesser von 180 μm bis 450 μm und ein Partikelgewicht von 0,5 mg bis 10,0 mg aufweisen, wobei der durchschnittliche Zelldurchmesser gemäß dem Verfahren in der Beschreibung gemessen wird.

**11.** Ein geschäumter Formgegenstand auf Polypropylenbasis, erhalten durch Formen der expandierten Partikel auf Polypropylenbasis gemäß einem der Ansprüche 1 bis 10.

**12.** Der geschäumte Formgegenstand auf Polypropylenbasis gemäß Anspruch 11, wobei der geschäumte Formgegenstand einen Sauerstoffindex von nicht weniger als 26,0 % aufweist, wie gemäß JIS K7201 gemessen.

**13.** Der geschäumte Formgegenstand auf Polypropylenbasis gemäß Anspruch 11 oder 12, wobei der geschäumte Formgegenstand auf Polypropylenbasis eine Dichte von 15,0 g/L bis 92,0 g/L aufweist, gemessen gemäß dem Verfahren in der Beschreibung.

**14.** Der geschäumte Formgegenstand auf Polypropylenbasis gemäß Anspruch 11 oder 12, wobei der geschäumte Formgegenstand auf Polypropylenbasis eine Dichte von mehr als 92,0 g/L und nicht mehr als 400,0 g/L aufweist, gemessen gemäß dem Verfahren in der Beschreibung.

**15.** Ein Verfahren zur Herstellung von expandierten Partikeln auf Polypropylenbasis, umfassend:

einen Dispersionsschritt des Dispergierens von Harzpartikeln auf Polypropylenbasis, einem wässrigen Dispersionsmedium und einem Treibmittel in einem Behälter; und
einen Freisetzungsschritt des Freisetzens in einen Bereich mit einem Druck, der niedriger ist als ein Innendruck des Behälters, einer Dispersionsaufschlämmung, erhalten in dem Dispersionsschritt, wobei
die Harzpartikel auf Polypropylenbasis eine organische Verbindung auf Phosphorbasis (B) in einer Menge von

mehr als 10,0 Gew.-% und nicht mehr als 20,0 Gew.-% und ein gehindertes Amin (C) in einer Menge von 1,0 Gew.-% bis 10,0 Gew.-%, bezogen auf 100 Gew.-% als eine Gesamtmenge der Harzpartikel auf Polypropylenbasis, enthalten.

**16.** Das Verfahren gemäß Anspruch 15, wobei die Dispersionsaufschlämmung tertiäres Calciumphosphat, Kaolin und Natriumdodecylbenzolsulfonat enthält.

**Revendications**

**1.** Particules expansées à base de polypropylène comprenant :

une résine à base de polypropylène (A), un composé à base de phosphore organique (B), et une amine encombrée (C),
lesquelles particules expansées à base de polypropylène contiennent
le composé à base de phosphore organique (B) en une quantité supérieure à 10,0 % en poids et non supérieure à 20,0 % en poids et
l'amine encombrée (C) en une quantité de 1,0 % en poids à 10,0 % en poids pour une quantité totale de 100 % en poids des particules expansées à base de polypropylène.

**2.** Particules expansées à base de polypropylène selon la revendication 1, dans lesquelles le composé à base de phosphore organique (B) est un phosphonate cyclique.

**3.** Particules expansées à base de polypropylène selon la revendication 2, dans lesquelles le phosphonate cyclique est un bisphosphonate cyclique.

**4.** Particules expansées à base de polypropylène selon la revendication 3, dans lesquelles le bisphosphonate cyclique est le diphosphonate de pentaérythrityle.

**5.** Particules expansées à base de polypropylène selon l'une quelconque des revendications 1 à 4, dans lesquelles le rapport en poids (rapport (B)/(C)) du composé à base de phosphore organique (B) à l'amine encombrée (C) est de 1,0 à 20,0.

**6.** Particules expansées à base de polypropylène selon l'une quelconque des revendications 1 à 5, dans lesquelles le rapport en poids de la résine à base de polypropylène (A) à la somme du composé à base de phosphore organique (B) et de l'amine encombrée (C) (rapport (A)/{(B)+(C)} est de 1 à 10.

**7.** Particules expansées à base de polypropylène selon l'une quelconque des revendications 1 à 6, lesquelles particules expansées à base de polypropylène ont deux pics de fusion et une quantité de chaleur de fusion du côté des hautes températures de 5,0 J/g à 25,0 J/g telle que mesurée par calorimétrie à balayage différentiel.

**8.** Particules expansées à base de polypropylène selon l'une quelconque des revendications 1 à 7, dans lesquelles l'indice de fluage (MI) de la résine à base de polypropylène (A) est de 3,00 g/10 minutes à 30,00 g/10 minutes, mesuré conformément à la méthode dans la description.

**9.** Particules expansées à base de polypropylène selon l'une quelconque des revendications 1 à 8, dans lesquelles la résine à base de polypropylène (A) est un copolymère aléatoire de propylène et d'un monomère autre que le propylène.

**10.** Particules expansées à base de polypropylène selon l'une quelconque des revendications 1 à 9, lesquelles particules expansées à base de polypropylène ont un diamètre de cellule moyen de 180 μm à 450 μm et un poids de particule de 0,5 mg à 10,0 mg, le diamètre de cellule moyen étant mesuré conformément à la méthode dans la description.

**11.** Produit moulé expansé à base de polypropylène obtenu par moulage des particules expansées à base de polypropylène selon l'une quelconque des revendications 1 à 10.

**12.** Produit moulé expansé à base de polypropylène selon la revendication 11, lequel produit moulé expansé a un indice d'oxygène non inférieur à 26,0 % tel que mesuré conformément à la norme JIS K7201.

**13.** Produit moulé expansé à base de polypropylène selon la revendication 11 ou 12, lequel produit moulé expansé à base de polypropylène a une densité de 15,0 g/l à 92,0 g/l, mesurée conformément à la méthode dans la description.

**14.** Produit moulé expansé à base de polypropylène selon la revendication 11 ou 12, lequel produit moulé expansé à base de polypropylène a une densité supérieure à 92,0 g/l et non supérieure à 400 g/l, mesurée conformément à la méthode dans la description.

**15.** Méthode pour produire des particules expansées à base de polypropylène, comprenant :

une étape de dispersion dans laquelle des particules de résine à base de polypropylène, un milieu de dispersion aqueux et un agent gonflant sont dispersés dans un récipient ; et
une étape de libération dans laquelle, dans une région ayant une pression inférieure à la pression interne du récipient, une bouillie en dispersion obtenue dans l'étape de dispersion est libérée,
dans laquelle les particules de résine à base de polypropylène contiennent un composé à base de phosphore organique (B) en une quantité supérieure à 10,0 % en poids et non supérieure à 20,0 % en poids et une amine encombrée (C) en une quantité de 1,0 % en poids à 10,0 % en poids pour une quantité totale de 100 % en poids des particules expansées à base de polypropylène.

**16.** Méthode selon la revendication 15, dans laquelle la bouillie en dispersion contient du phosphate de calcium tertiaire, du kaolin, et du dodécylbenzènesulfonate de sodium.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2016052739 A
- JP H09227711 A
- FR 1503429
- US 4174343 A
- GB 1515223 A
- US 3152164 A
- WO 2009153034 A
- WO 2009055993 A
- EP 0889085 A
- EP 2225318 A
- EP 0309402 A
- US 8598369 B

### Non-patent literature cited in the description

- *CHEMICAL ABSTRACTS*, 191680-81-6